(19) **Europäisches Patentamt / European Patent Office / Office européen des brevets**

(11) **EP 3 913 569 B1**

(12) # EUROPEAN PATENT SPECIFICATION

(45) Date of publication and mention
of the grant of the patent:
**24.09.2025 Bulletin 2025/39**

(21) Application number: **19909669.4**

(22) Date of filing: **28.01.2019**

(51) International Patent Classification (IPC):
**G06T 1/00** (2006.01)    **G06T 5/50** (2006.01)
**G06T 9/00** (2006.01)    **H04L 9/08** (2006.01)
**G06F 21/32** (2013.01)    **G06F 21/62** (2013.01)
**G06V 40/10** (2022.01)    **G06F 21/00** (2013.01)
**H04N 19/467** (2014.01)

(52) Cooperative Patent Classification (CPC):
**G06V 40/10; G06F 21/32; G06F 21/6245;
G06T 1/0021; H04L 9/0866; H04N 19/467;
G06T 2201/0051; G06T 2201/0052; G06V 40/53**

(86) International application number:
**PCT/KR2019/001157**

(87) International publication number:
**WO 2020/149441 (23.07.2020 Gazette 2020/30)**

(54) **METHOD FOR SECURING IMAGE AND ELECTRONIC DEVICE PERFORMING SAME**

VERFAHREN ZUR BILDSICHERUNG UND ELEKTRONISCHE VORRICHTUNG ZUR
DURCHFÜHRUNG DES VERFAHRENS

PROCÉDÉ POUR SÉCURISER UNE IMAGE ET DISPOSITIF ÉLECTRONIQUE LE METTANT EN
OEUVRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.01.2019 KR 20190006926**

(43) Date of publication of application:
**24.11.2021 Bulletin 2021/47**

(73) Proprietor: **Samsung Electronics Co., Ltd.**
**Suwon-si, Gyeonggi-do 16677 (KR)**

(72) Inventors:
• **POPOV, Artem**
**Suwon-Si, Gyeonggi-do 16677 (KR)**
• **POPOV, Oleksandr**
**Suwon-Si, Gyeonggi-do 16677 (KR)**
• **KULAKOV, Aleksey**
**Suwon-Si, Gyeonggi-do 16677 (KR)**
• **ASTRAKHANTSEV, Andrii**
**Suwon-Si, Gyeonggi-do 16677 (KR)**
• **SHCHUR, Oleksandr**
**Suwon-Si, Gyeonggi-do 16677 (KR)**

• **TATARINOVA, Yuliia**
**Suwon-Si, Gyeonggi-do 16677 (KR)**

(74) Representative: **Taor, Simon Edward William et al**
**Venner Shipley LLP**
**200 Aldersgate**
**London EC1A 4HD (GB)**

(56) References cited:
KR-A- 20140 089 810    KR-A- 20150 099 650
KR-A- 20160 057 101    KR-A- 20170 022 592
KR-B1- 100 874 382    US-A1- 2005 226 470
US-A1- 2017 053 128

• RIBARIC SLOBODAN ET AL: "De-identification
for privacy protection in multimedia content: A
survey", SIGNAL PROCESSING. IMAGE
COMMUNICATION, ELSEVIER SCIENCE
PUBLISHERS, AMSTERDAM, NL, vol. 47, 1 June
2016 (2016-06-01), pages 131 - 151,
XP029753254, ISSN: 0923-5965, DOI: 10.1016/
J.IMAGE.2016.05.020

**Description**

TECHNICAL FIELD

The present disclosure relates to a method of securing an image and an electronic device for performing the same. Specifically, the present disclosure relates to a method of securing an image including biometric data.

BACKGROUND ART

With the recent advancements in technology, display devices for displaying visual content may store captured pieces of visual content in the display devices themselves or on a web connected to the display devices in a wired or wireless manner. Furthermore, as the Internet or social network services (SNS) are activated, a large number of images or videos are being updated on the web in real-time.

Pieces of visual content uploaded to the Internet via a SNS, etc. may include pieces of information related to personal privacy, which allow a user to be identified. For example, visual content uploaded via a SNS or the like often includes pieces of biometric data that allows identification of an individual, such as an individual's face image, iris image, fingerprint image, etc.

Recently, as devices capable of capturing high-quality visual content have been developed, pieces of visual content on the Internet or the web include sufficiently high-quality biometric data to obtain personal identification information. Also, with the advancements in Internet technologies, pieces of high-quality visual content may be shared with multiple people in real-time regardless of time and space constraints.

Hackers may obtain personal identification information that allow identification of an individual from high-quality visual content including biometric data, and illegally access an individual's mobile phone or bank account by using the obtained personal identification information. Accordingly, there is a need for a technology for processing visual content to prevent leakage of personal identification information from visual content containing an individual's biometric data. US2005226470 discloses an iris region of an eye is detected from an original image and image conversion is performed to the detected iris region so that feature data unique to the person can not be extracted. For example, the iris region is divided into a plurality of portions and respective images of divided portions are re-arranged in a predetermined order or at random.

DESCRIPTION OF EMBODIMENTS

TECHNICAL PROBLEM

According to an embodiment of the disclosure, a method of setting security on an image and a method of releasing security of an image may be provided.

According to an embodiment, a method of setting security on an image including biometric data and an electronic device for performing the same may also be provided.

SOLUTION TO PROBLEM

As a technical means for achieving the above technical objectives, according to an embodiment of the present disclosure, a method of setting security on an image is provided as set out in claim 1. Additional features are set out in claims 2 to 9. According to another aspect, a method of releasing security of an image including biometric data is provided as set out in claim 10. Additional features are set out in claim 11. According to another aspect, an electronic device is provided as set out in claim 12. Additional features are set out in claims 13 and 14.

ADVANTAGEOUS EFFECTS OF DISCLOSURE

In an electronic device according to the present disclosure, leakage of biometric data from visual content including biometric data may be prevented.

BRIEF DESCRIPTION OF DRAWINGS

FIG. 1 is a diagram for schematically describing a method, performed by an electronic device, of setting security on an image, according to an embodiment.
FIG. 2 is a diagram for describing the possibility of abuse of biometric data leaked from visual content.

FIG. 3 is a flowchart of a method, performed by an electronic device, of setting security on an image, according to an embodiment.

FIG. 4 is a diagram for describing in detail a method, performed by an electronic device, of setting security on an image, according to an embodiment.

FIG. 5 is a diagram for describing a method, performed by an electronic device, of setting security on an image including iris information, according to another embodiment.

FIG. 6 is a diagram for describing in detail a method, performed by an electronic device, of setting security on an image including iris information, according to an embodiment.

FIG. 7 is a diagram for describing a process of generating a second image by synthesizing a first image with a watermark, according to an embodiment.

FIG. 8 is a diagram for describing a method, performed by an electronic device, of setting security on an image including fingerprint information, according to another embodiment.

FIG. 9 is a diagram for describing in detail a method, performed by an electronic device, of setting security on an image including fingerprint information, according to an embodiment.

FIG. 10 is a diagram for describing a method, performed by an electronic device, of setting security on an image including vein information, according to another embodiment.

FIG. 11 is a diagram for describing a method, performed by an electronic device, of setting security on an image including face information, according to another embodiment.

FIG. 12 is a diagram for describing a method, performed by an electronic device, of setting security on an image including face information, according to another embodiment.

FIG. 13 is a diagram for describing in detail a method of setting security on an image including face information, according to an embodiment.

FIG. 14 is a diagram for describing a method, performed by an electronic device, of setting security on an image including information about an ear shape, according to another embodiment.

FIG. 15 is a diagram for describing in detail a method, performed by an electronic device, of setting security on an image including information about an ear shape, according to an embodiment.

FIG. 16 is a flowchart of a method, performed by an electronic device, of releasing security on an image including biometric data, according to an embodiment.

FIG. 17 is a diagram for describing in detail a method, performed by an electronic device, of releasing security of an image, according to an embodiment.

FIG. 18 is a diagram for describing a method, performed by an electronic device, of releasing security of an image including iris information, according to another embodiment.

FIG. 19 is a diagram for describing a method, performed by an electronic device, of releasing security of an image including fingerprint information, according to another embodiment.

FIG. 20 is a diagram for describing a method, performed by an electronic device, of releasing security of an image including vein information, according to another embodiment.

FIG. 21 is a diagram for describing a method, performed by an electronic device, of releasing security of an image including face information, according to another embodiment.

FIG. 22 is a diagram for describing a method, performed by an electronic device, of releasing security of an image including face information, according to another embodiment.

FIG. 23 is a diagram for describing a method, performed by an electronic device, of releasing security of an image including information about an ear shape, according to another embodiment.

FIG. 24 is a diagram for describing a method, performed by an electronic device, of setting security on an image including a plurality of pieces of biometric data, according to an embodiment.

FIG. 25 is a diagram for describing a method, performed by an electronic device, of releasing security of an image including a plurality of pieces of biometric data, according to an embodiment.

FIG. 26 is a block diagram of an electronic device for performing a method of setting security on an image including biometric data and a method of releasing security of an image, according to an embodiment.

FIG. 27 is a block diagram of an electronic device for performing a method of setting security on an image including biometric data and a method of releasing security of an image, according to another embodiment.

FIG. 28 is a diagram for describing categories of biometric data included in an image processed by an electronic device, according to an embodiment.

FIG. 29 is a diagram for describing a method, performed by an electronic device, of setting security on or releasing security of an image by using a server, according to an embodiment.

FIG. 30 is a block diagram of a server according to an embodiment.

BEST MODE

Provided is a method of setting security on an image including biometric data, according to an embodiment, the method including: searching for a region including the biometric data in a first image; detecting a biometric image corresponding to the biometric data in the searched region; encoding the detected biometric image; and generating a second image by synthesizing a watermark for blocking access to the biometric data, the first image, and the encoded biometric image.

The watermark may be created using the biometric data and a preset encryption key in at least one domain from among the spatial domain and the frequency domain.

The searching for the region including the biometric data may further include, when the first image is input, searching for the region by using an image learning model that outputs location information for identifying the found region and the region including the biometric data.

The detecting of the biometric image may further include determining categories of the biometric data included in the searched region; and detecting the biometric image for each of the determined categories of the biometric data.

The detecting of the biometric image may further include: obtaining predetermined user identification information; and detecting, in the searched region, a biometric image that matches the obtained user identification information.

The encoding of the biometric image may include determining, based on a category of the biometric data, an encoding parameter for encoding the biometric image and encoding the biometric image by using the determined encoding parameter.

The encoding parameter may be prestored in a memory within an electronic device for performing the method of setting security of the image including the biometric data, or be embedded into the first image.

The biometric data may include at least one of iris information, face information, fingerprint information, palm print information, vein information, and ear shape information.

The method may further include sharing the second image with a database outside an electronic device for performing the method of setting security of the image including the biometric data.

The first image may be obtained from at least one from among a memory within an electronic device for performing the method of setting security of the image including the biometric data, another electronic device connected to the electronic device in a wired or wirelessly manner and including a display panel for displaying an image, and a database that stores a plurality of images outside of the electronic device.

Provided is a method of releasing security of an image including biometric data, according to an embodiment, the method including: searching for a region including the biometric data in a second image; detecting a biometric image corresponding to the biometric data in the searched region; decoding the detected biometric image; and generating a first image by using a watermark for blocking access to the biometric data, the decoded biometric image, and the second image.

The watermark may be detected in the second image and decrypted in advance by using a preset decryption key.

An electronic device for setting security on an image, according to an embodiment, includes: a communication interface; a memory storing one or more instructions; and at least one processor configured to execute the one or more instructions to control the electronic device to: search for a region including the biometric data in a first image; detect a biometric image corresponding to the biometric data in the searched region; encode the detected biometric image; and generate a second image by synthesizing a watermark for blocking access to the biometric data, the first image, and the encoded biometric image.

The watermark may be created using the biometric data and a preset encryption key in at least one domain from among the spatial domain and the frequency domain.

Provided is an electronic device for releasing security of an image, according to an embodiment, the electronic device including: a communication interface; a memory storing one or more instructions; and at least one processor configured to execute the one or more instructions to control the electronic device to: search for a region including the biometric data in a second image; detect a biometric image corresponding to the biometric data in the searched region; decode the detected biometric image; and generate a first image by using a watermark for blocking access to the biometric data, the decoded biometric image, and the second image.

MODE OF DISCLOSURE

Terms used in the present specification will now be briefly described and then embodiments of the present disclosure will be described in detail.

As the terms used herein, general terms that are currently widely used are selected by taking functions in the present disclosure into account, but the terms may have different meanings according to an intention of one of ordinary skill in the art, precedent cases, advent of new technologies, etc. Furthermore, specific terms may be arbitrarily selected by the applicant, and in this case, the meaning of the selected terms will be described in detail in the detailed description of the disclosure. Thus, the terms used herein operation should be defined not by simple appellations thereof but based on the meaning of the terms together with the overall description of the present disclosure.

Throughout the specification, when a part "includes" or "comprises" an element, unless there is a particular description contrary thereto, the part may further include other elements, not excluding the other elements. Furthermore, terms, such as "portion," "module," etc., described herein indicate a unit for processing at least one function or operation and may be embodied as hardware or software or a combination of hardware and software.

Embodiments of the present disclosure will now be described more fully hereinafter with reference to the accompanying drawings so that they may be easily implemented by one of ordinary skill in the art to which the present disclosure belongs. However, the present disclosure may have different forms and should not be construed as being limited to the embodiments set forth herein. Parts not related to descriptions of the present disclosure are omitted to clearly explain the present disclosure in the drawings, and like reference numerals denote like elements throughout.

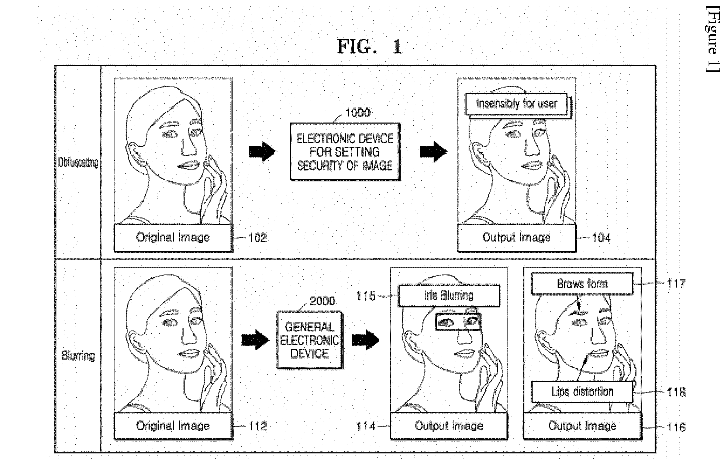

FIG. 1 is a diagram for schematically describing a method, performed by an electronic device, of setting security on an image, according to an embodiment.

According to an embodiment, by performing a method of setting security on an image including biometric data, the electronic device 1000 may prevent leakage of the biometric data from the image including the biometric data. The leakage of biometric data described herein may mean access to biometric data, which is gained by a hacker who attempts to abuse the biometric data. According to an embodiment, a method of securing an image may include a method of setting security on an image and a method of releasing security of an image.

As devices capable of capturing high-quality visual content have been developed, pieces of visual content on the Internet or the web include sufficiently high-quality biometric data to obtain personal identification information, and there is a problem in that hackers may obtain without permission personal identification information that allow identification of an individual from high-quality visual content including biometric data.

In order to solve this problem, general electronic devices 3000 generate output images 114 and 116 by blurring partial images 115 and 117 corresponding to biometric images in an image 112 including face information, iris information, etc., and prevent leakage of data via visual distortion of a biometric image (e.g., blurring the biometric image or changing an outline of the biometric image). However, when the general electronic device 3000 blurs a biometric image, a problem occurs in that pieces of visual information in an image are changed, and thus, the same visual contents may not be delivered or a visual quality may be degraded.

Unlike in the general electronic device 2000, because the electronic device 1000 according to an embodiment is able to maintain the same pieces of visual information of a biometric image when encoding the biometric image in order to prevent leakage of biometric data from an image, a quality of the image may be maintained, and at the same time the leakage of biometric data may be prevented. That is, the electronic device 1000 according to the embodiment encodes a biometric image detected in an original image, and because an output image 104 generated by synthesizing the encoded biometric image, a watermark, and the original image is not visually different from the original image, a user cannot perceive the difference between the original image 102 and the output image 104.

Pieces of visual information described in the present specification may include, but are not limited to, information about values of pixels in an image, an arrangement pattern of pixels, and a brightness, a contrast, and a shadow of the image, which are determined based on the pixel values and the arrangement pattern of the pixels.

According to an embodiment, synthesizing, by the electronic device 1000, the encoded biometric image, the watermark, and the original image may correspond to a process of obfuscating the original image. For example, the electronic device 1000 may obfuscate a biometric image included in a first image so that an unauthorized person is not allowed to obtain, detect, or reproduce biometric data from the first image. Furthermore, the electronic device 1000 may obfuscate the biometric image included in the first image, thereby preventing an unauthorized person from accessing biometric data included in the first image. According to another embodiment, synthesizing, by the electronic device 1000, the encoded biometric image, the watermark, and the original image may correspond to a process of embedding the encoded biometric image and the watermark into the original image.

According to an embodiment, the electronic device 1000 may be implemented in various forms. Examples of the electronic device 1000 described in the present specification may include, but are not limited to, a digital camera, a mobile terminal, a smart phone, a laptop computer, a tablet PC, an e-book terminal, a digital broadcasting terminal, a personal digital assistant (PDA), a portable multimedia player (PDD), a navigation device, a TV, a TV set-top box, a digital single-lens reflex camera, a phone camera, etc., all of which include a display panel.

The electronic device 1000 described herein may be a wearable device that can be worn by the user. The wearable device may include at least one of an accessory type device (e.g., a watch, a ring, a wristband, an ankle band, a necklace, glasses, or contact lenses), a head-mounted-device (HMD), a fabric- or garment-integrated device (e.g., an electronic garment), a body-attached device (e.g., a skin pad), or a bio- implantable device (e.g., an implantable circuit), but is not limited thereto.

FIG. 2 is a diagram for describing the possibility of abuse of biometric data leaked from visual content.

Pieces of visual content uploaded to the Internet via social network services (SNS), etc. may include pieces of information related to personal privacy, which allow a user to be identified. For example, visual content uploaded via SNS or the like often includes pieces of biometric data that allows identification of an individual, such as an individual's face image, iris image, fingerprint image, etc.

Recently, as devices capable of capturing high-quality visual content have been developed, pieces of visual content on the Internet or the web include sufficiently high-quality biometric data to obtain personal identification information, and an image obtained in real-time by capturing an image of an object also often includes sufficiently high-quality biometric data to obtain personal identification information.

Hackers who want to obtain other people's biometric data without permission may obtain biometric data from an image 202 obtained from another person's phone on which photos are taken, an image 204 uploaded on the web via an SNS, an image 206 obtained from another person's phone on which a video call is performed, or an image 208 broadcast on a TV. In addition, hackers may use the obtained other person's biometric data to access the other person's mobile phone (212) or to access the other person's bank account (214).

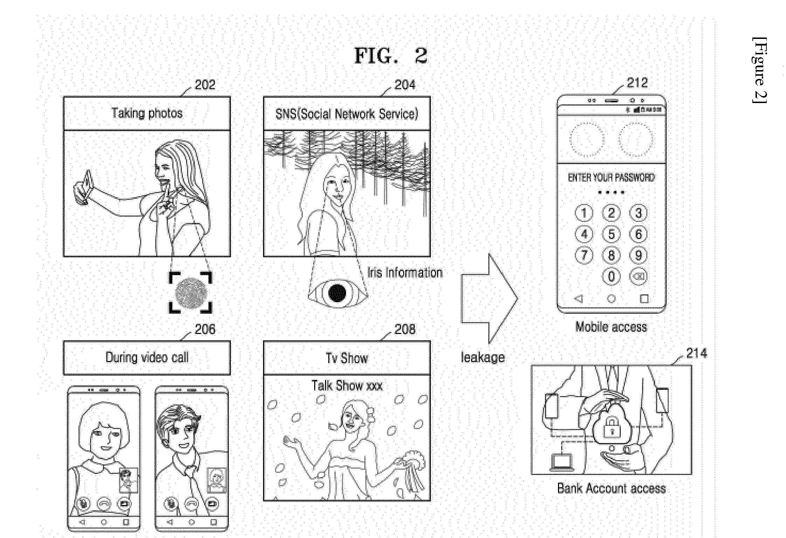

FIG. 3 is a flowchart of a method, performed by an electronic device, of setting security on an image, according to an embodiment.

In operation S310, the electronic device 1000 may search for a region including the biometric data in a first image. For example, when obtaining a first image including face information, the electronic device 1000 may search for a facial region in a first image by using an Eigenface algorithm. According to another embodiment, when the first image is input, the electronic device 1000 may search for the region including the biometric data by using an image learning model that outputs the region including the biometric data and location information for identifying the searched region. Because the image learning model used by the electronic device 1000 may be optimized based on a history of biometric data included in an image or video, the electronic device 1000 may effectively search for a region including the biometric data in an image.

According to an embodiment, the location information output from the image learning model may include information about coordinates of pixels in the image. According to another embodiment, the image learning model may be trained based on a history of a previously input image, and the electronic device 1000 may search for a region including more accurate biometric data by using an image learning model pre-trained based on the history of the image.

For example, the electronic device 1000 may search for a region including the biometric data in the first image by using a deep learning algorithm having a deep neural network (DNN) architecture with multiple layers. Deep learning may be basically formed as a DNN architecture with several layers. Neural networks used by the electronic device according to the present disclosure may include a convolutional neural network (CNN), a DNN, a recurrent neural network (RNN), and a bidirectional recurrent DNN (BRDNN), but are not limited thereto. According to an embodiment, a neural network used by the electronic device 1000 may be an architecture in which a fully-connected layer is connected to a CNN architecture in which convolutional layers and pooling layers are repetitively used.

According to an embodiment, the first image obtained by the electronic device 1000 may be obtained from at least one of a memory within the electronic device 1000 that performs a method of setting security on an image including the biometric data, another electronic device connected to the electronic device in a wired or wirelessly manner and including a display panel for displaying an image, and a database (DB) that stores a plurality of images outside of the electronic device. In other words, the first image obtained by the electronic device 1000 may be obtained from a web DB connected to the electronic device, an SNS, a photo bank, a home library, a streaming video service, etc.

In operation S320, the electronic device 1000 may detect a biometric image in the searched region. For example, the electronic device 1000 may search for a region including biometric data and detect a biometric image corresponding to the biometric data in the searched region. According to an embodiment, the biometric image may include at least one of a face image, a fingerprint image, a vein image, an ear shape image, and a palm print image. The electronic device 1000 may detect a biometric image in the searched region by using an image segmentation algorithm.

According to an embodiment, the electronic device 1000 may determine categories of biometric data included in the searched region and detect a biometric image for each of the determined categories of biometric data. For example, when the first image includes face information and fingerprint information, the electronic device 1000 may determine categories of the biometric data included in the first image as face data and fingerprint data, and detect biometric images respectively corresponding to the face data and the fingerprint data.

According to another embodiment, the electronic device 1000 may obtain predetermined user identification information and detect a biometric image that matches the obtained user identification information in the region including the biometric data. For example, by using user identification information capable of identifying a specific user, the electronic device 1000 may detect only a biometric image of the user that matches the obtained user identification information from among biometric images of a plurality of users included in the first image. In other words, the electronic device 1000 may prevent only leakage of a specific user's biometric data by encoding a biometric image corresponding to the specific user's biometric data.

According to another embodiment, when the first image is input, the electronic device 1000 may detect a biometric image by using a pre-trained image learning model that outputs the biometric image. When the first image is input, the electronic device 1000 may effectively detect a biometric image in the first image because a pre-trained image learning model that outputs a biometric image may be optimized based on a history of biometric data in an image or video.

In operation S330, the electronic device 1000 may encode the detected biometric image. For example, the electronic device 1000 may determine a category of biometric data included in the first image, determine an encoding parameter for encoding a biometric image based on the determined category of biometric data, and encode the biometric image by using the determined encoding parameter. According to an embodiment, the electronic device 1000 may determine at least one of an encoding parameter and an encoding metric based on a category of biometric data, and encode the biometric image by using the determined at least one of the encoding parameter and the encoding metric.

According to an embodiment, the encoding parameter may vary according to the category of biometric data. Furthermore, the encoding parameter may be prestored in a memory within the electronic device 1000 that performs a method of setting security on an image including biometric data, or may be embedded into the first image together with the biometric data. For example, when the first image contains iris information, the encoding parameter may include a random variable for defining a Gabor filter that is used to extract iris features and an integration variable and a differentiation variable for determining a Doughman's integral differential operator.

In operation S340, the electronic device 1000 may generate a second image by synthesizing a watermark, the first image, and the encoded biometric image. For example, the electronic device 1000 may synthesize the watermark, the first image, and the encoded biometric image in at least one of a spatial domain and a frequency domain. According to an embodiment, the spatial domain may be a domain in which a brightness and a pixel value of a pixel whose location is defined by two-dimensional (2D) coordinates in an image are used as variables, and the frequency domain may be a domain in which a frequency based on a wavelet transform or discrete cosine transform is used as a variable. According to an embodiment, the watermark may be created in at least one of the spatial domain and the frequency domain by using the biometric data and a preset encryption key.

According to an embodiment, the electronic device 1000 may perform the method of setting security on an image while searching for visual content including the image or video, but it may also perform the method after finishing searching for the visual content. According to another embodiment, each operation of the method of setting security on an image may be performed by the electronic device 1000 through different services stored in a plurality of electronic devices 1000.

According to another embodiment, after taking a photo, the electronic device 1000 may perform the image security setting method described with reference to FIG. 3 with respect to the taken photo. That is, the first image may include a photo or image taken in real-time. Furthermore, the electronic device 1000 may apply the image security setting method to a video as well as an image. In other words, the electronic device 1000 may perform obfuscation for preventing leakage of biometric data even with respect to a video obtained during a video call.

According to an embodiment, the method of setting security on an image including biometric data may be performed by the electronic device 1000 at a window system level, but at a level of application program stored in the electronic device 1000. In addition, the second image generated by the electronic device 1000 according to the present disclosure may be shared with a DB outside the electronic device that performs the method of setting security on an image including biometric data.

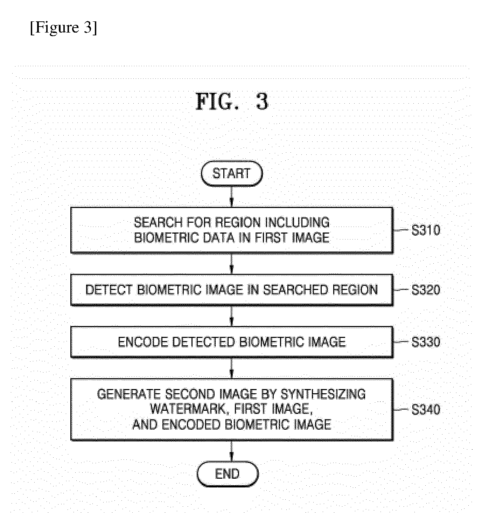

FIG. 4 is a diagram for describing in detail a method, performed by an electronic device, of setting security on an image, according to an embodiment.

Because operation S410 may correspond to operation S320 of FIG. 3, a detailed description thereof will be omitted herein. Because operation S420 may correspond to operation S320 of FIG. 3, a detailed description thereof will be omitted herein. Because operation S430 may correspond to operation S330 of FIG. 3, a detailed description thereof will be omitted herein.

In operation S440, the electronic device 1000 may create a watermark by using biometric data included in a first image and a preset encryption key. For example, the electronic device 1000 may create a watermark by encrypting, with a preset encryption key, pieces of information about at least one biometric feature determined from the biometric data included in the first image. For example, the watermark may be created in at least one of a spatial domain and a frequency domain by using the biometric data and the preset encryption key.

According to an embodiment, a watermark is a technology that is mainly used for copyright protection for content to offer invisibility, robustness, clarity, and security, and the watermark may include copyright information, ownership information, information about original content, pieces of information for checking the presence of forgery. According to an embodiment, by synthesizing the watermark with an original image, the electronic device 1000 may prevent leakage of biometric data from the original image while at the same time maintaining the same visual information of the original image.

The encryption key may be stored in a memory within the electronic device 1000 that performs an image security setting method or be stored in a server connected to the electronic device 1000 in a wired or wirelessly manner. According to an embodiment, when a fingerprint image is included in the first image, the electronic device 1000 may detect the fingerprint image, generate high curvature points (HCPs) from the detected fingerprint image, and create a watermark by encrypting features corresponding to the generated HCPs by using a preset encryption key.

In operation S450, the electronic device 1000 may generate a second image by synthesizing the watermark, the first image, and the encoded biometric image. For example, the electronic device 1000 may synthesize the watermark, the first image, and the encoded biometric image in at least one of a spatial domain or a frequency domain. The electronic device 1000 may synthesize the watermark, the first image, and the encoded biometric image via pixel-wise calculations.

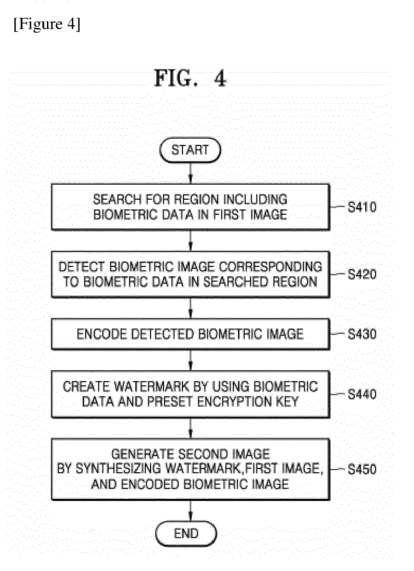

FIG. 5 is a diagram for describing a method, performed by an electronic device, of setting security on an image including iris information, according to another embodiment.

In operation S502, the electronic device 1000 may obtain a first image. For example, the electronic device 1000 may obtain the first image from a memory within the electronic device 1000 or from a server or another electronic device connected to the electronic device 1000 in a wired or wirelessly manner. According to another embodiment, the electronic device 1000 may obtain the first image by capturing an image of objects around the electronic device in real-time. The first image may be generated by dividing an image captured by the electronic device 1000 at predetermined time intervals.

In operation S504, the electronic device 1000 may detect a boundary and a center of an iris in the first image. For example, the electronic device 1000 may detect the boundary and center of the iris in each of a person's left and right eyes included in the first image. In operation S506, the electronic device 1000 may detect a boundary and a center of a pupil in the first image. The electronic device 1000 may determine a pupil boundary, a pupil center, an iris boundary, and an iris center of each of the left and right eyes, and detect an iris image by using the determined pupil boundary, pupil center, iris boundary, and iris center.

In operation S508, the electronic device 1000 may generate a feature map. For example, the electronic device 1000 may determine iris features from the iris image by using the detected iris boundary, iris center, pupil boundary, and pupil center, and generate a feature map by using the determined iris features. For example, in the present specification, the iris features may include information about at least one of a center of an iris circle, a radius of the iris circle, a diameter of the iris circle, a radius of the iris circle, a center of a pupil circle, a radius of the pupil circle, a diameter of the pupil circle, a radius of the pupil circle, a difference between the radii of the iris circle and the pupil circle, and a ratio between the radii of the pupil circle and the iris circle.

Thus, the feature map generated by the electronic device 1000 by using the determined iris features may include information about at least one of the center of the iris circle, the radius of the iris circle, the diameter of the iris circle, the center of the pupil circle, the radius of the pupil circle, the diameter of the pupil circle, the difference between the radii of the iris circle and the pupil circle, and the ratio between the radii of the pupil circle and the iris circle, which are all obtained for each pixel in an iris image or in a preset domain.

In operation S510, the electronic device 1000 may normalize the generated feature map. According to an embodiment, normalizing the generated feature map by the electronic device 1000 may be defined as transforming pixels in the generated feature map from polar coordinates into linear coordinates. According to another embodiment, a process, performed by the electronic device 1000, of normalizing the generated feature map may correspond to a process of normalizing the iris image. In other words, the electronic device 1000 may normalize the iris image by transforming pixels in the iris image from an orthogonal (Cartesian) coordinate system into a generalized coordinate system.

In operation S512, the electronic device 1000 may encode the normalized iris image. For example, the electronic device 1000 may encode the iris image by using at least one of a convolution transform and a wavelet transform. Furthermore, the electronic device 1000 may filter the iris image before encoding the normalized iris image. According to an embodiment, the electronic device 1000 may filter the iris image by using at least one of a Gabor filter and a Haar filter.

In operation S514, the electronic device 1000 may determine specter between the original iris image and a filtered iris image. Specter according to the present disclosure may mean a spectral difference between an unfiltered original iris image and a filtered iris image. In operation S516, the electronic device 1000 may create a watermark by encrypting the specter between the unfiltered original iris image and the filtered iris image with a preset encryption key.

In operation S518, the electronic device may embed the watermark into the first image. For example, the electronic device may insert the watermark into the first image by changing a brightness, a pixel value, etc. of a pixel included in the first image. However, the electronic device 1000 may insert the watermark into the first image by adding watermark data transformed into the frequency domain to biometric data included in the first image transformed into the frequency domain.

In operation S520, the electronic device 1000 may denormalize the normalized iris image. For example, the electronic device 1000 may denormalize the iris image by transforming pixels in the normalized iris image from the generalized coordinate system into the orthogonal (Cartesian) coordinate system.

In operation S522, the electronic device 1000 may embed the encoded iris image into the first image. In operation S524, the electronic device 1000 may generate a second image by using the encoded iris image and the first image into which the watermark is embedded. According to an embodiment, a process, performed by the electronic device 1000, of synthesizing the watermark, the encoded iris image, and the first image may correspond to a process of embedding the watermark and the encoded iris image into the first image.

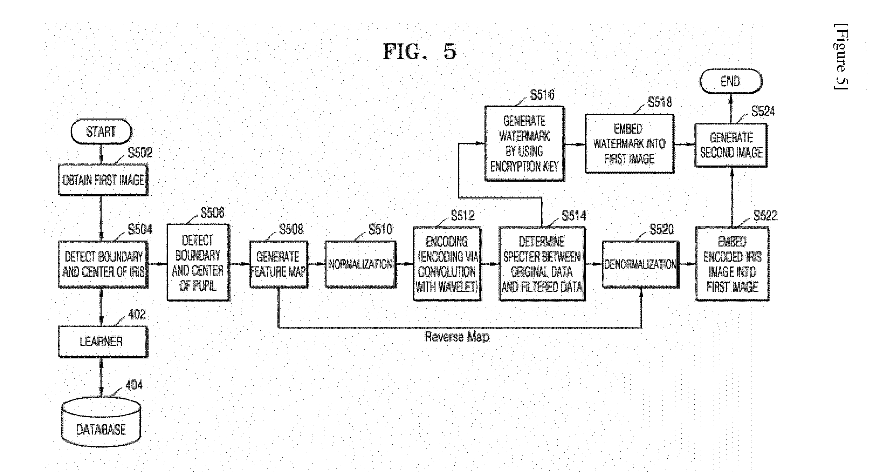

FIG. 6 is a diagram for describing in detail a method, performed by an electronic device, of setting security on an image including iris information, according to an embodiment.

In operation S602, the electronic device 1000 may obtain an original image. For example, the original image obtained by the electronic device 1000 may include an iris image corresponding to iris information. In operation S604, the electronic device 1000 may normalize the obtained original image. Because operation S604 may correspond to operation S510 of FIG. 5, a detailed description thereof will be omitted herein. In operation S606, the electronic device 1000 may obtain a one- dimensional (1D) original signal from the normalized image.

In operation S608, the electronic device 1000 may filter the obtained 1D original signal. For example, the electronic device 1000 may filter the obtained 1D original signal by using at least one of a Gabor filter and a Haar filter. According to an embodiment, filtering, by the electronic device 1000, the obtained 1D original signal by using at least one of a Gabor filter and a Haar filter may correspond to a process of extracting iris features from the original image.

In operation S610, the electronic device 1000 may modify the original image by using the obtained filtered 1D signal. According to an embodiment, the electronic device 1000 may modify at least a part of the original image by using the filtered 1D signal. In operation S612, the electronic device 1000 may generate a synthetic image by synthesizing the original image with the image obtained by modifying the original image. In operation S614, the electronic device 1000 may segment an iris image from the generated synthetic image. The electronic device 1000 may segment the iris image by using a preset image segmentation algorithm.

In operation S616, the electronic device 1000 may detect iris features in the segmented iris image. According to an embodiment, the iris features may include information about geometric parameters corresponding to positions of a pupil and an iris in the iris image and information about an iris texture. In operation S618, the electronic device 1000 may generate an iris code by encoding the detected iris features. The electronic device 1000 may generate a similarity parameter by comparing the generated iris code with a target code.

According to an embodiment, the similarity parameter may include Hamming distance (HD). The HD is a distance function indicating how many symbols are different at the same position in two strings of the same length, and in particular, for binary codes, the HD may indicate the number of bits that are different in binary codes to be compared. The electronic device 1000 may encode HD calculated as a result of comparing an iris code with a target code, and encode a biometric image included in the original image by using the encoded HD.

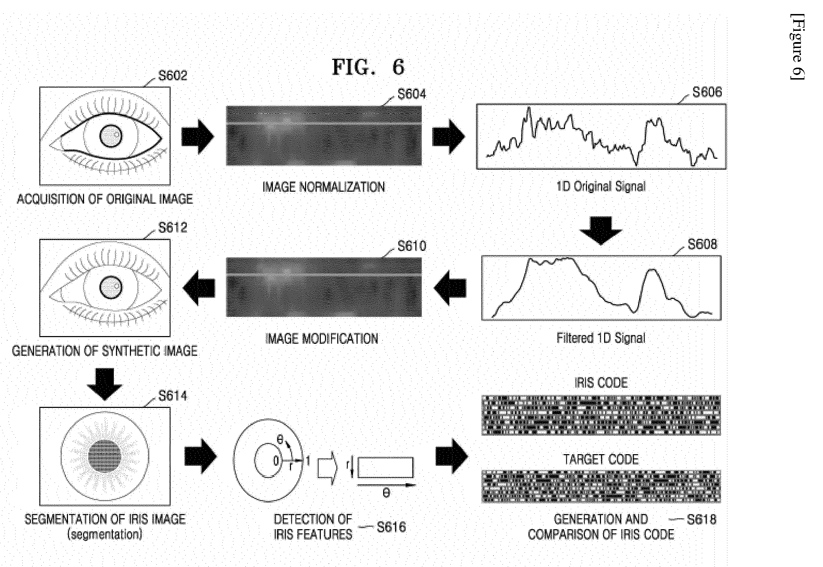

FIG. 7 is a diagram for describing a process of generating a second image by synthesizing a first image with a watermark, according to an embodiment.

According to an embodiment, the electronic device 1000 may create a watermark by using biometric data included in an image and an encryption key. The electronic device 1000 may generate a second image by synthesizing a watermark, an encoded biometric image, and a first image. The watermark generated by the electronic device 1000 may be scaled to the same size as the first image 702, and the scaled watermark may be synthesized with the first image 702. According to an embodiment, the electronic device 1000 may synthesize the watermark with all regions of the first image 702 or with only at least some regions of the first image.

According to another embodiment, the electronic device 1000 may determine a watermark pattern based on biometric data included in an image and a preset encryption key, and generate a second image by synthesizing a watermark generated according to the determined watermark pattern, an encoded biometric image, and a first image. When the watermark created by the electronic device 1000 is synthesized onto the first image, the same pieces of visual information of the first image may be maintained. Thus, pieces of visual information of the second image generated by the electronic device 1000 may be the same as the pieces of visual information of the first image.

According to an embodiment, the watermark created by the electronic device 1000 may include modified parameters for a random smart depth map (RSDM) or an original depth map. Furthermore, the watermark may include a parameter indicating distortion of the surrounding area. In addition, the watermark created by the electronic device 1000 may be embedded into the first image in a spatial domain (e.g., a change in a brightness ratio of an image) or a transformation domain (e.g., a wavelet domain or transformation of discrete cosine transform coefficients). According to an embodiment, the electronic device 1000 may perform encryption and decryption processes on the watermark in a secure world in which security is ensured.

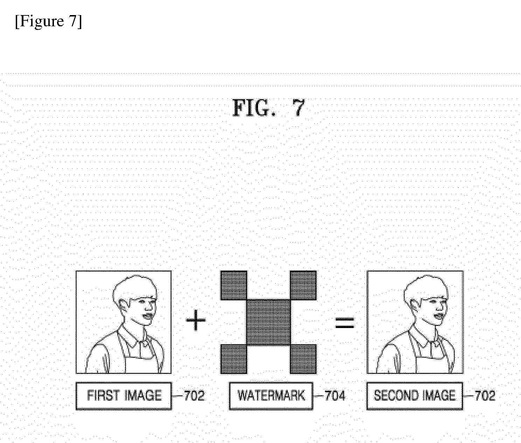

FIG. 8 is a diagram for describing a method, performed by an electronic device, of setting security on an image including fingerprint information, according to another embodiment.

In operation S802, the electronic device 1000 may obtain a first image. The first image obtained by the electronic device 1000 may include a fingerprint image corresponding to fingerprint information. Although not shown in FIG. 8, the electronic device 1000 may perform image binarization on the obtained first image before detecting a core point, a feature point, etc. in the first image. For example, the electronic device 1000 may simplify the first image into black and white by referring to information about directional properties of light and shadows included in the first image including the fingerprint image. The electronic device 1000 may use at least one algorithm from among Otsu adaptive thresholding, Bradley local thresholding, Bernsen thresholding, and maximum entropy thresholding in order to binarize the first image.

In operation S804, the electronic device 1000 may detect a core point (an upper core) in the first image. In operation S806, the electronic device 1000 may detect feature points and a curve in the first image. According to another embodiment, the electronic device 1000 may obtain, from the first image, a core point, a feature point, and a curve as well as a ridge, a valley, an ending point, a bifurcation, a lower core, a lift, and a minutia point which is a point where a structure of the ridge changes.

For example, a ridge may refer to a portion that appears as a line in a fingerprint or a raised portion like a mountain range, and a valley may refer to a depression between ridges. Furthermore, an end point may indicate a point where a ridge ends, and a bifurcation may indicate a point where a ridge diverges. In addition, a core point may indicate a topmost point of an upward curving part, a lower core may indicate a lowermost point of a downward curving part, and a lift may mean a point where ridge flows converge in three directions.

In operation S808, the electronic device 1000 may generate HCP(High Curvature Points) from the generated curve. For example, the electronic device 1000 may detect a plurality of feature points from the generated curve, generate feature vectors by using the detected feature points, and determine a curvature of the curve by using angles of the generated feature vectors. The electronic device 1000 may generate, as HCP, points having a curvature change greater than or equal to a preset threshold, based on a change in the determined curvature of the curve.

In operation S810, the electronic device 1000 may determine HCP features by using the generated HCP. For example, the electronic device 1000 may determine a curvature change between HCP, a distance between HCP, and locations of HCP by using the HCPs. According to an embodiment, the HCP features may include information about a curvature change between HCP, a distance between HCP, and locations of HCP.

In operation S812, the electronic device 1000 may create a watermark by encrypting the determined HCP features with a preset encryption key. Operation S812 of FIG. 8 may correspond to operation S516 of FIG. 5. In operation S814, the electronic device 1000 may embed the created watermark into the first image. According to an embodiment, the embedding, by the electronic device 1000, the created watermark into the first image may correspond to a process of synthesizing the watermark and the first image.

In operation S818, the electronic device 1000 may transform the determined HCP features. For example, the electronic device 1000 may transform the HCP features according to a predetermined encoding parameter. According to an embodiment, the electronic device 1000 may transform the HCP features by changing locations of at least one of the generated HCP using an encoding parameter.

In operation S820, the electronic device 1000 may encode the transformed HCP features. For example, the electronic device 1000 may generate a fingerprint code by encoding the transformed HCP features, and encode a fingerprint image by using the generated fingerprint code. In operation S822, the electronic device 1000 may embed the encoded fingerprint image into the first image. In operation S824, the electronic device 1000 may generate a second image by embedding the encoded fingerprint image and the watermark into the first image.

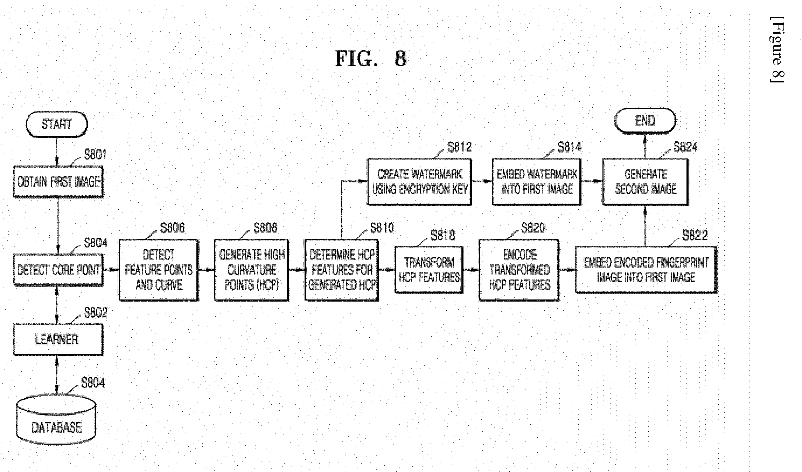

FIG. 9 is a diagram for describing in detail a method, performed by an electronic device, of setting security on an image including fingerprint information, according to an embodiment.

Referring to FIG. 9, the electronic device 1000 may encode a fingerprint image in various ways. In operation S912, the electronic device 1000 may detect feature points in the fingerprint image. In operation S914, the electronic device 1000 may generate feature vectors by using the detected feature points. For example, the electronic device 1000 may generate feature vectors by randomly selecting at least some of the generated feature points. According to another embodiment, the electronic device 1000 may generate all possible feature vectors from the generated feature points.

In operation S916, the electronic device 1000 may perform a linear transformation on the generated feature vectors by using a linear equation.

【Equation 1】

$$\mathbf{Y} = \mathbf{X} \times (\mathbf{a} + \Delta\mathbf{a}) + (\mathbf{b} + \Delta\mathbf{b})$$

where Y denotes a transformed feature vector, and X denotes a feature vector before it is transformed. In addition, a and b denote linear parameters, and $\Delta a$ and $\Delta b$ denote noise parameters. The electronic device 1000 may transform a feature vector by using preset linear parameters and noise parameters. The electronic device 1000 may transform fingerprint features by transforming a feature vector determined from the fingerprint image. The linear parameters and the noise parameters may correspond to the encoding parameter in operation S330 of FIG. 3.

According to another embodiment, the electronic device 1000 may transform feature vectors by using a homography matrix. For example, the electronic device 1000 may detect feature points in operation S922 and generate feature vectors by using the detected feature points in operation S924. In operation S926, the electronic device may generate a homography matrix by using feature vectors and matrix transformation components.

【Equation 2】

$$Y = X \times H$$

where Y denotes a transformed fingerprint feature matrix, and X denotes a fingerprint feature matrix before it is transformed. In addition, H represents a homography matrix. The electronic device 1000 may generate a fingerprint feature matrix by using feature vectors determined from a fingerprint image, and transform the fingerprint feature matrix by performing matrix multiplication on the generated fingerprint feature matrix and the homography matrix. The electronic device 1000 may transform fingerprint features in the fingerprint image by transforming the fingerprint feature matrix. According to an embodiment, the homography matrix may include a rotation component and a translation component.

According to another embodiment, the electronic device 1000 may detect HCPs in a fingerprint image, determine HCP features from the detected HCPs, and transform fingerprint features by transforming the determined HCP features. For example, in operation S932, the electronic device 1000 may detect a curve in a fingerprint image. In operation S934, the electronic device 1000 may detect HCP in the detected curve. Operation S934 may correspond to operation S808 of FIG. 8.

【Equation 3】

$$Y = (a + \Delta a) \times X^2 + (b + \Delta b) \times X + (c + \Delta c)$$

where Y denotes a transformed HCP feature vector, and X denotes a HCP feature vector before it is transformed. In addition, a, b, and c denote linear parameters, and $\Delta a$, $\Delta b$, and $\Delta c$ denote noise parameters.

In operation S936, the electronic device 1000 may transform a HCP feature vector by using Equation 3. In other words, the electronic device 1000 may transform a HCP feature vector by using preset linear parameters and noise parameters. According to an embodiment, the electronic device 1000 may transform fingerprint features by transforming a HCP feature vector determined from a fingerprint image. The linear parameters and the noise parameters in Equation 3 above may correspond to the encoding parameter in operation S330 of FIG. 3.

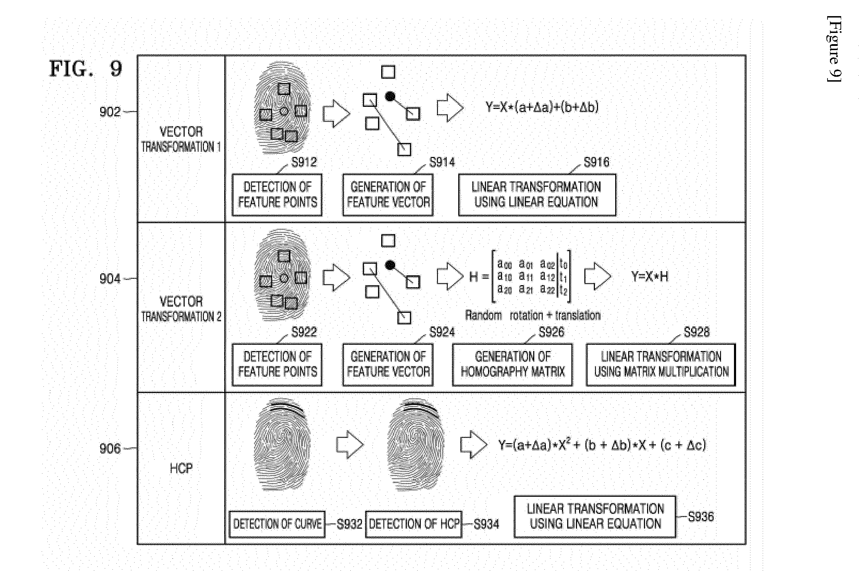

FIG. 10 is a diagram for describing a method, performed by an electronic device, of setting security on an image including vein information, according to another embodiment.

In operation S1002, the electronic device may obtain a first image. For example, the first image obtained by the electronic device 1000 may include a vein image corresponding to vein information. Although not shown in FIG. 10, the electronic device 1000 may perform image binarization on the obtained first image before detecting a core point, a feature point, etc., in the first image.

For example, the electronic device 1000 may simplify the first image including the vein image into black and white by referring to information about directional properties of light and shadows included in the first image. The electronic device 1000 may use at least one algorithm from among Otsu adaptive thresholding, Bradley local thresholding, Bernsen thresholding, and maximum entropy thresholding to binarize the first image.

In operation S1004, the electronic device 1000 may detect a core point in the first image. In operation S1006, the electronic device 1000 may detect feature points in the first image. In operation S1008, the electronic device 1000 may generate feature vectors by using the detected feature points and the core point. According to an embodiment, the feature points detected by the electronic device may include a minutia point. Furthermore, the feature vectors generated by the electronic device 1000 may include information about coordinates of at least one feature point and an angle formed between the feature points.

According to an embodiment, the electronic device 1000 may generate all possible feature vectors from the detected feature points, but it may randomly select some of the feature points and generate feature vectors by using only the randomly selected feature points. In operation S1010, the electronic device 1000 may determine a homography matrix by using the detected feature points. Operation S1010 may correspond to operation S926 of FIG. 9.

In operation S1012, the electronic device 1000 may use the determined feature vectors to determine vein features represented by the feature vectors. For example, the electronic device 1000 may use the determined feature vectors to determine a distance between feature points, locations of feature points, a curvature between feature vectors, a difference in angle between feature vectors, etc. According to an embodiment, the vein features may include a distance between feature points, locations of feature points, a curvature between feature vectors, a difference in angle between feature vectors, etc.

In operation S1014, the electronic device 1000 may use the determined homography matrix to determine the vein features represented by the homography matrix. According to an embodiment, the vein features represented by the homography matrix may correspond to the vein features in operation S1012.

In operation S1016, the electronic device 1000 may create a watermark by using an encryption key. For example, the electronic device 1000 may create a watermark by encrypting, with an encryption key, the determined feature vectors and vein features represented by the feature vectors. In operation S1018, the electronic device 1000 may create a watermark by using an encryption key. For example, the electronic device 1000 may create a watermark by encrypting, with an encryption key, the determined homography matrix and vein features represented by the homography matrix.

In operation S1020, the electronic device 1000 may transform the vein features represented by the feature vectors. A process of transforming, by the electronic device 1000, vein features represented by feature vectors may to the process of transforming, by the electronic device 1000, the fingerprint features represented by the feature vectors as described with reference to FIG. 9. For example, the electronic device 1000 may transform the vein features represented by the feature vectors by transforming the feature vectors using preset linear parameters and noise parameters.

In operation S1022, the electronic device 1000 may transform the vein features represented by the homography matrix. A process of transforming, by the electronic device 1000, the vein features represented by the homography matrix may correspond to the process of transforming, by the electronic device 1000, the fingerprint features represented by the homography matrix, as described with reference to FIG. 9. For example, the electronic device 1000 may generate a vein feature matrix by using the feature points determined from the vein image, or transform the vein feature matrix by performing matrix multiplication on the generated vein feature matrix and the homography matrix. The electronic device 1000 may transform the vein features in the vein image by transforming the vein feature matrix.

In operation S1024, the electronic device 1000 may embed, into the first image, the watermark created by encrypting the feature vectors and the vein features represented by the feature vectors. According to an embodiment, embedding, by the electronic device 1000, the created watermark into the first image may correspond to a process of synthesizing the watermark and the first image. In operation S1026, the electronic device may embed, into the first image, the watermark created by encrypting the homography matrix and the vein features represented by the homography matrix. In operation S1028, the electronic device 1000 may embed an encoded vein image into the first image.

Although not shown in FIG. 10, before embedding an encoded vein print image into the first image, the electronic device 1000 may encode the vein image by encoding the transformed vein features represented by the feature vectors and the transformed vein features represented by the homography matrix. In operation S1030, the electronic device 1000 may generate a second image by synthesizing the encoded vein image, the watermark created by encrypting the feature vectors and the vein features represented by the feature vectors, and the watermark created by encrypting the homography matrix and the vein features represented by the homography matrix.

In other words, the electronic device 1000 may determine feature vectors and a homography matrix from a vein image, create a plurality of watermarks respectively from the feature vectors and the homography matrix, and generate a second image by using the watermarks respectively created for the feature vectors and the homography matrix.

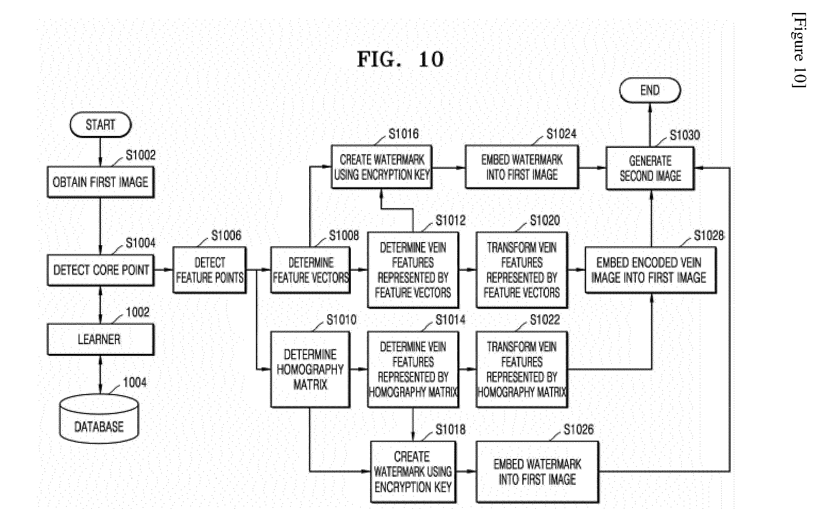

FIG. 11 is a diagram for describing a method, performed by an electronic device, of setting security on an image including face information, according to another embodiment.

In operation S1102, the electronic device 1000 may obtain a first image. For example, the first image obtained by the electronic device 1000 may include a face image corresponding to face information. In operation S1104, the electronic device 1000 may detect first keypoints in the obtained first image. According to an embodiment, the electronic device 1000 may use a Harris corner detection algorithm, Scale Invariant Feature Transform (SIFT), a Features from Accelerated Segment Test (FAST) algorithm, etc., but the present disclosure is not limited thereto.

In operation S1106, the electronic device 1000 may detect second keypoints for detecting a depth map. According to an embodiment, the electronic device 1000 may generate a RSDM by using the detected second keypoints. The RSDM may include depth information of an area around the second keypoints detected by the electronic device 1000. In operation S1108, the electronic device 1000 may create a watermark by using the second keypoints in the RSDM. For example, the electronic device 1000 may create a watermark by encrypting, with an encryption key, facial features represented by the second keypoints in the RSDM.

In operation S1110, the electronic device 1000 may detect keypoints around a distortion area. For example, the electronic device 1000 may determine light-shadow features of the distortion area in a face image by detecting matrix-based keypoints around the distortion area. The electronic device 1000 may create a watermark by encrypting, with an encryption key, the light-shadow features of the distortion area in the face image and facial features represented by the detected second keypoints.

In operation S1112, the electronic device 1000 may embed the created watermark into the first image. According to an embodiment, embedding, by the electronic device 1000, the created watermark into the first image may correspond to a process of synthesizing the watermark and the first image.

In operation S1114, the electronic device 1000 may transform the determined light-shadow features. The electronic device 1000 may transform facial features by transforming the determined light-shadow features. In operation S1116, the electronic device 1000 may encode the transformed facial features. For example, the electronic device 1000 may determine facial features (e.g., light-shadow features) from the face image within the first image, transform the determined facial features, and encode the face image by encoding the transformed facial features.

In operation S1118, the electronic device 1000 may embed the encoded face image into the first image. According to an embodiment, embedding, by the electronic device 1000, the encoded face image into the first image may correspond to a process of synthesizing the encoded face image and the first image. In operation S1120, the electronic device 1000 may generate a second image by embedding the watermark and the encoded face image into the first image.

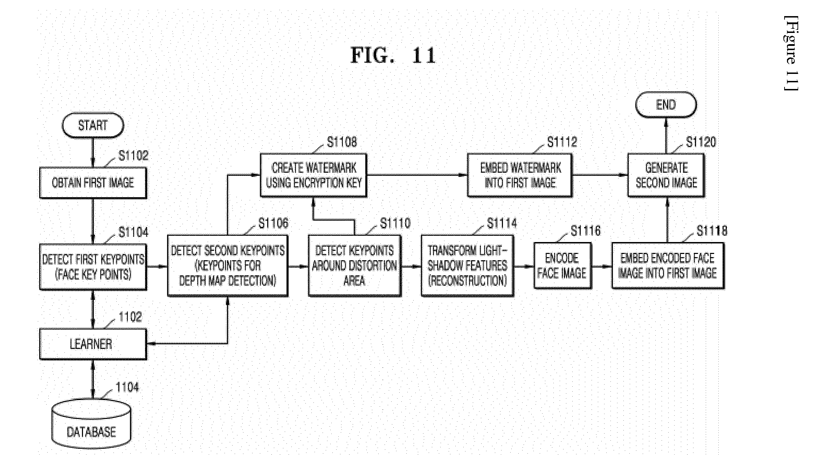

FIG. 12 is a diagram for describing a method, performed by the electronic device 1000, of setting security on an image including face information, according to another embodiment.

Because operation S1202 may correspond to operation S1102 of FIG. 11, a detailed description thereof will be omitted herein. In operation S1204, when a face image is input, the electronic device 1000 may detect first keypoints by using an image learning model that outputs location information of keypoints for determining the keypoints from the face image. For example, the electronic device 1000 may detect the first keypoints in the face image via a learner 1202 connected to a database 1204 in which a learning model pre-trained based on a plurality of face images is stored.

In operation S1208, the electronic device 1000 may detect second keypoints for detecting a depth map. In operation S1206, the electronic device 1000 may generate a RSDM via the learner 1202 for learning a pre-trained learning model stored in the database 1204. In operation S1208, the electronic device 1000 may detect the second keypoints by using a RSDM. The RSDM used by the electronic device 1000 may have reversible characteristics in watermark extraction and decryption.

According to another embodiment, the electronic device 1000 may detect the second keypoints and generate a RSDM by using the detected second keypoints. According to an embodiment, the electronic device 1000 may detect keypoints by using at least one of a Harris corner detection algorithm, SIFT, and a FAST algorithm, but the present disclosure is not limited thereto. The RSDM may include depth information of an area around the second keypoints detected by the electronic device 1000.

According to another embodiment, the electronic device 1000 may detect second keypoints and determine a sparce matrix or skew-symmetric matrix for a HD between the detected second keypoints. A maximum value of the hamming distance HD may be defined based on a sparse matrix or skew-symmetric matrix, and a level of distortion between the second keypoints may be determined. The electronic device 1000 may transform light-shadow features of a distortion area around the second keypoints by using the maximum value of the HD and the level of distortion between the second keypoints.

In operation S1212, the electronic device 1000 may embed the created watermark into the first image. According to an embodiment, embedding, by the electronic device 1000, the created watermark into the first image may correspond to a process of synthesizing the first image and the watermark. In operation S1214, the electronic device 1000 may transform light-shadow features. For example, the electronic device 1000 may determine light-shadow features, which are one of facial features, by using the detected first and second keypoints, and transform the determined light-shadow features.

In operation S1216, the electronic device 1000 may encode the face image. For example, the electronic device 1000 may transform facial features by transforming light-shadow features, and encode the face image by encoding the transformed facial features. In operation S1218, the electronic device 1000 may embed the encoded face image into the first image. For example, embedding, by the electronic device 1000, the encoded face image into the first image may correspond to a process of synthesizing the encoded face image and the first image.

In operation S1220, the electronic device 1000 may generate a second image by embedding the encoded face image and the watermark into the first image. For example, embedding the encoded face image and watermark in the first image by the electronic device 1000 may correspond to a process of synthesizing the encoded face image, the watermark, and the first image.

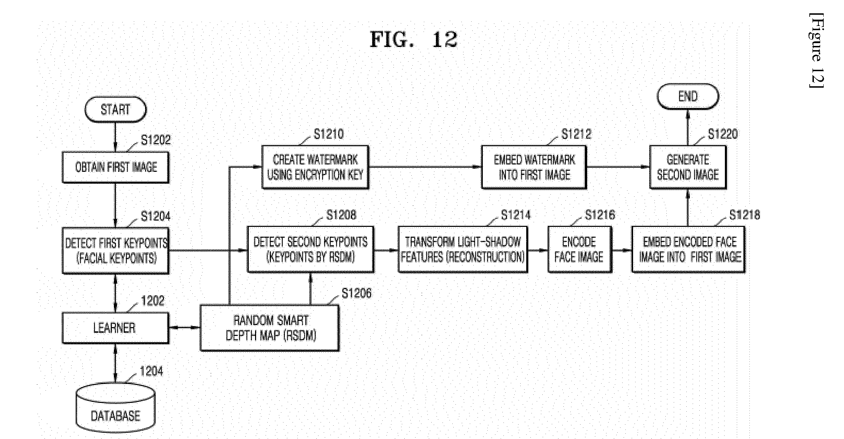

FIG. 13 is a diagram for describing in detail a method of setting security on an image including face information, according to an embodiment.

In operation S1302, the electronic device 1000 may detect a face image in a first image. According to an embodiment, the electronic device 1000 may detect a face image by using at least one of a genetic algorithm and an eigenface algorithm. In operation S1304, the electronic device 1000 may detect facial keypoints in the detected face image. For example, the electronic device 1000 may detect keypoints by using at least one of a Harris corner detection algorithm, SIFT, and a FAST algorithm, but the present disclosure is not limited thereto.

In operation S1306, the electronic device 1000 may detect keypoints for generating a depth map. According to an embodiment, the electronic device 1000 may search for a specific region surrounding the detected keypoints and may set a distortion area within the searched specific region. According to an embodiment, each distortion area may include information about a difference in depth for area unit.. In operation S1308, the electronic device may detect keypoints around the set distortion area. For example, the electronic device 1000 may encode a face image by detecting keypoints in a distortion area, transforming facial features represented by the detected keypoints, and encoding the transformed facial features.

In operation S1310, the electronic device 1000 may detect keypoints by using a RSDM. In operation S1312, the electronic device 1000 may distort light-shadow features represented by the keypoints detected using the RSDM. For example, the keypoints on the RSDM, which are detected by the electronic device 1000, may include pixel values, and accordingly, each distortion area around the detected keypoints may represent a pixel value for area unit. (e.g., an average of pixel values in a corresponding area). The electronic device 1000 may distort light-shadow features in the face image by changing pixel values for area unit.

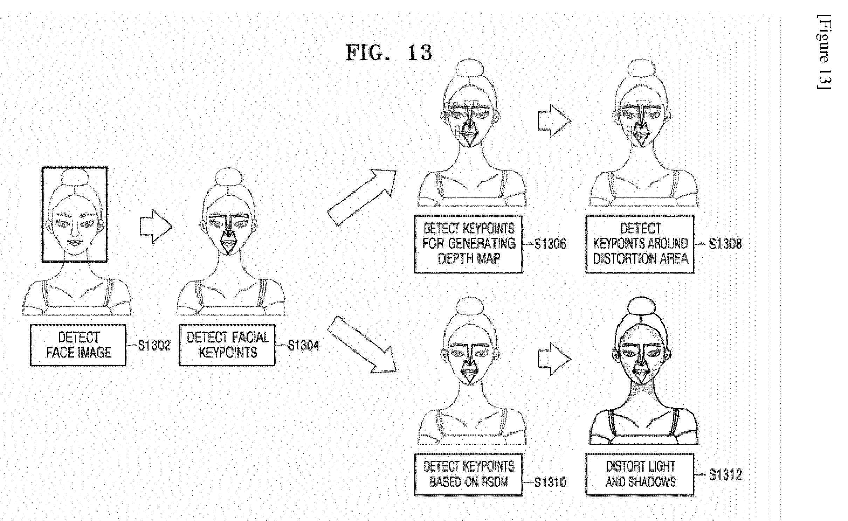

FIG. 14 is a diagram for describing a method, performed by an electronic device, of setting security on an image including information about an ear shape, according to another embodiment.

In operation S1402, the electronic device 1000 may obtain a first image. For example, the first image obtained by the electronic device 1000 may include an ear image corresponding to information about an ear shape. In operation S1406, the electronic device 1000 may detect an edge representing an ear shape in the ear image. For example, the electronic device 1000 may detect an edge representing an ear shape in the ear image by using a force field transform algorithm. For example, the electronic device 1000 may detect an edge representing an ear in the ear image by using a force field where each pixel in the first image exerts on its neighboring pixels an isotropic force that is proportional to intensity of the corresponding pixel and inversely proportional to the square of a distance from the pixel in all directions.

In operation S1408, the electronic device 1000 may detect a strength of the force field in the first image. For example, the electronic device 1000 may determine a net force by adding all the forces received by the force field generated by neighboring pixels of a specific pixel within a force field generated by each pixel. For example, when pixels x1, x2, and x3 are located around a specific pixel x0, forces exerted on the specific pixel x0 by the pixels x1, x2, and x3 may be represented by p1, p2, and p3, respectively. According to an embodiment, a force acting on a specific pixel in a force field is a force vector and may have a magnitude and a direction. The electronic device 1000 may determine a net force exerted on the pixel x0 by calculating a vector sum of all the forces p1, p2, and p3 acting on the pixel x0.

In operation S1414, the electronic device 1000 may determine a force field line matrix. For example, the electronic device 1000 may detect a strength of the force field, generate field lines that flow into wells by connecting net forces acting on each pixel, and determine a force field line matrix by using the generated field lines.

In operation S1410, the electronic device 1000 may generate an encryption key. According to an embodiment, the encryption key used by the electronic device 1000 may be prestored in a memory within the electronic device. In operation S1412, the electronic device 1000 may determine an encryption method. According to an embodiment, the electronic device 1000 may determine at least one of a Feistel structure and a substitution-permutation (S-P) network as an encryption method.

In operation S1416, the electronic device 100 may compute a dome matrix by using the detected strength of force field, the encryption key, and the determined encryption method. In the present specification, a dome matrix is a dome-shaped matrix, and may be generated using an encryption key and wells and ridges in the first image transformed into the force field. In operation S1418, the electronic device 1000 may encode the dome matrix and the force field line matrix. According to another embodiment, the electronic device 1000 may determine characteristics related to the ear shape represented by the dome matrix and the force field line matrix and transform ear shape features by transforming the determined characteristics related to the ear shape. The electronic device 1000 may encode the ear image by encoding the transformed characteristics related to the ear shape.

In operation S1420, the electronic device 1000 may embed the encoded ear image into the first image. According to an embodiment, embedding, by the electronic device 1000, the encoded ear image into the first image may correspond to a process of synthesizing the encoded ear image and the first image. In operation S1422, the electronic device 1000 may generate a second image by synthesizing the encoded ear image and the first image.

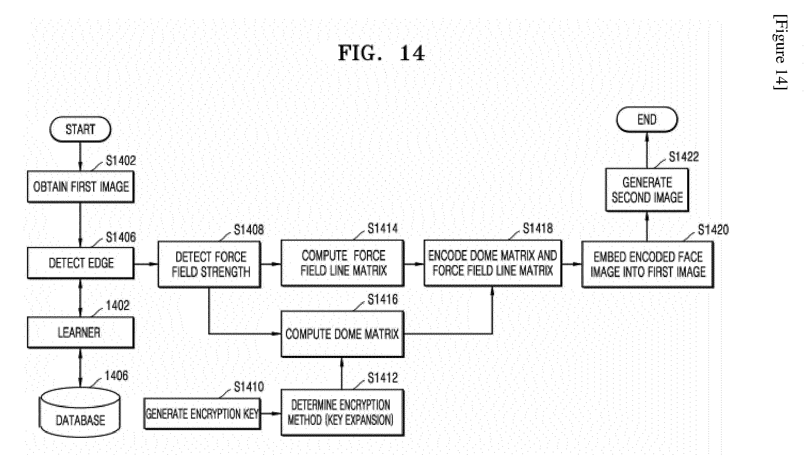

FIG. 15 is a diagram for explaining in detail a method, performed by an electronic device, of setting security on an image including information about an ear shape, according to an embodiment.

In operation S1504, the electronic device 1000 may detect a force field strength. Because operation S1504 may correspond to operation S1408 of FIG. 14, a detailed description thereof will be omitted herein. In operation S1506, the electronic device 1000 may generate force field lines, wells, and ridges by using the detected force field strength. For example, the electronic device 1000 may detect a force field strength and generate field lines that flow into wells, the wells, and ridges by connecting net forces acting on each pixel. Because operation S1508 may correspond to operation S1416 of FIG. 14, a detailed description thereof will be omitted herein.

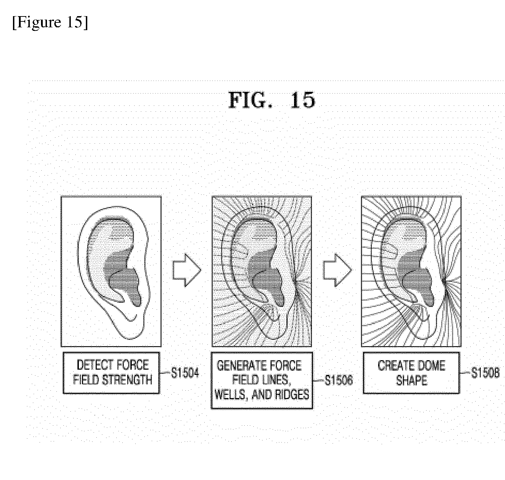

FIG. 16 is a flowchart of a method, performed by an electronic device, of releasing security of an image including biometric data, according to an embodiment.

In operation S1610, the electronic device 1000 may search for a region including the biometric data in a second image. For example, the second image may be an image which is generated by synthesizing a watermark, a first image, and an encoded biometric image and on which image security has been set to prevent leakage of biometric data. Because operation S1610 may correspond to operation S310 of FIG. 3, a detailed description thereof will be omitted herein.

In operation S1620, the electronic device 1000 may detect a biometric image in the searched region. The electronic device 1000 may determine categories of biometric data included in the searched region and detect a biometric image for each of the determined categories of biometric data. Because operation S1620 may correspond to operation S320 of FIG. 3, a detailed description thereof will be omitted herein.

In operation S1630, the electronic device 1000 may decode the detected biometric image. For example, the electronic device 1000 may determine a category of biometric data included in the second image, and decode the biometric image by using a decoding parameter determined based on the determined category of biometric data. According to an embodiment, the electronic device 1000 may determine at least one of a decoding parameter and a decoding metric based on a category of biometric data, and decode the biometric image by using the determined at least one of the decoding parameter and the decoding metric.

In operation S1640, the electronic device 1000 may generate a first image by using a watermark for blocking access to the biometric data, the decoded biometric image, and the second image. According to an embodiment, generating, by the electronic device 1000, the first image by using the watermark, the decoded biometric image, and the second image may correspond to a process of de-obfuscating the obfuscated second image.

According to an embodiment, the watermark used by the electronic device 1000 to generate the first image may be detected in the second image and be decrypted in advance by using a preset decryption key. According to another embodiment, the electronic device 1000 may generate the first image by using the decrypted watermark, the decoded biometric image, and the second image.

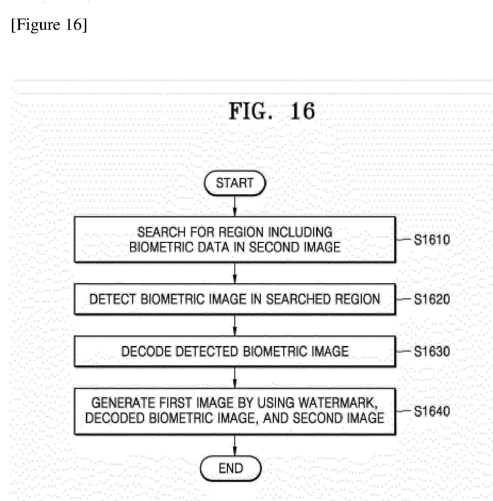

FIG. 17 is a diagram for describing in detail a method, performed by an electronic device, of releasing security of an image, according to an embodiment.

In operation S1710, the electronic device 1000 may search for a region including the biometric data in a second image. Because operation S1710 may correspond to operation S1610 of FIG. 16, a detailed description thereof will be omitted herein. Operation S1720 may correspond to operation S1620 of FIG. 16, and thus, a detailed description thereof will be omitted herein. In operation S1730, the electronic device 1000 may detect a watermark in the second image. For example, the electronic device 1000 may perform a de-embedding process to detect the watermark embedded in the second image.

In operation S1740, the electronic device 1000 may decode the detected biometric image. Because operation S1740 may correspond to operation S1630 of FIG. 16, a detailed description thereof will be omitted herein. In operation S1750, the electronic device 1000 may decrypt the detected watermark by using a preset decryption key. For example, the watermark detected by the electronic device 1000 in the second image is encrypted using a preset encryption key, and the electronic device 1000 may decrypt the watermark by using the preset decryption key in order to recognize the biometric data included in the watermark.

In operation S1760, the electronic device 1000 may generate a first image by using the decrypted watermark, the decoded biometric image, and the second image. For example, the electronic device 1000 may generate the second image by synthesizing the decrypted watermark, the decoded biometric image, and the second image. Synthesizing, by the electronic device 1000, the decrypted watermark, the decoded biometric image, and the second image may correspond to a process of embedding the decrypted watermark, the decoded biometric image, and the second image in the spatial domain or the frequency domain.

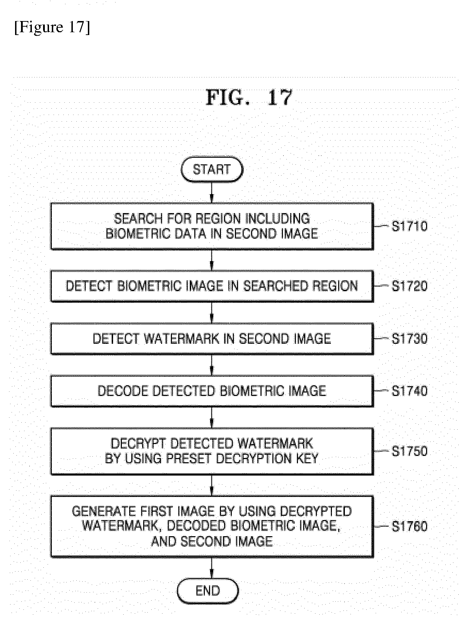

FIG. 18 is a diagram for describing a method, performed by an electronic device, of releasing security of an image including iris information, according to another embodiment.

In operation S1802, the electronic device 1000 may obtain a second image. For example, the second image obtained by the electronic device 1000 may include an encoded biometric image, an encrypted watermark, and a first image (e.g., an original image). Furthermore, although not shown in FIG. 18, the electronic device 1000 may perform image binarization on the image.

In operation S1804, the electronic device 1000 may detect a watermark in the second image. According to an embodiment, the watermark may be embedded in the second image and encrypted with a preset encryption key. According to another embodiment, the detected watermark may be prestored in a memory within the electronic device 1000.

In operation S1808, the electronic device 1000 may decrypt the detected watermark by using a preset decryption key. According to an embodiment, the decryption key may be prestored in a memory within the electronic device for which security is guaranteed, but may be received from a database in a network or another electronic device connected to the electronic device 1000.

In operation S1810, the electronic device 1000 may detect a boundary and a center of an iris in the second image. In operation S1812, the electronic device 1000 may detect a boundary and a center of a pupil in the second image. According to an embodiment, the electronic device 1000 may determine a pupil boundary, a pupil center, an iris boundary, and an iris center of each of the left and right eyes included in the second image, and detect an iris image by using the determined pupil boundary, pupil center, iris boundary, and iris center.

In operation S1814, the electronic device 1000 may generate a feature map. For example, the electronic device 1000 may determine iris features from the iris image by using the detected iris boundary, iris center, pupil boundary, and pupil center, and generate a feature map by using the determined iris features. For example, in the present specification, the iris features may include information about at least one of a center of an iris circle, a radius of the iris circle, a diameter of the iris circle, a radius of the iris circle, a center of a pupil circle, a radius of the pupil circle, a diameter of the pupil circle, a radius of the pupil circle, a difference between the radii of the iris circle and the pupil circle, and a ratio between the radii of the pupil circle and the iris circle. Because operation S1814 may correspond to operation S508 of FIG. 5, a detailed description thereof will be omitted herein.

In operation S1816, the electronic device 1000 may normalize the generated feature map. According to an embodiment, normalizing the generated feature map by the electronic device 1000 may be defined as transforming pixels in the generated feature map from an orthogonal coordinate system into a generalized coordinate system. In operation S1818, the electronic device 1000 may decode the normalized iris image. For example, the electronic device 1000 may decode the iris image by using at least one of a convolution transform and a wavelet transform.

In operation S1820, the electronic device 1000 may determine specter between the original iris image and a filtered iris image. Specter according to the present disclosure may mean a spectral difference between an unfiltered original iris image and a filtered iris image.

In operation S1822, the electronic device 1000 may denormalize the normalized iris image. For example, the electronic device 1000 may denormalize the iris image by transforming pixels in the normalized iris image from the generalized coordinate system into the orthogonal (Cartesian) coordinate system.

In operation S1824, the electronic device 1000 may embed the decoded iris image into the second image. In operation S1826, the electronic device 1000 may generate a first image by using the decoded iris image, the decrypted watermark, and the second image.

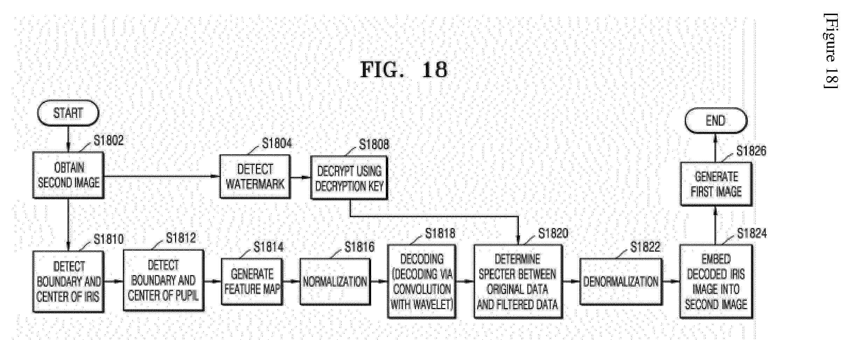

FIG. 19 is a diagram for describing a method, performed by an electronic device, of releasing security of an image including fingerprint information, according to another embodiment.

In operation S1902, the electronic device 1000 may obtain a second image. The second image obtained by the electronic device 1000 may include a fingerprint image corresponding to fingerprint information. Although not shown in FIG. 19, the electronic device 1000 may perform image binarization on the obtained first image before detecting a core point, a feature point, etc. in the first image.

In operation S1904, the electronic device 1000 may detect a watermark in the second image. Because operation S1904 may correspond to operation S1804 of FIG. 18, a detailed description thereof will be omitted herein. In operation S1906, the electronic device 1000 may decrypt the watermark by using a decryption key. Because operation S1906 may correspond to operation S1808 of FIG. 18, a detailed description thereof will be omitted herein.

In operation S1908, the electronic device 1000 may detect a core point (an upper core) in the second image. In operation S1910, the electronic device 1000 may detect feature points and a curve in the second image. According to another embodiment, the electronic device 1000 may obtain, from the second image, a core point, a feature point, and a curve as well as a ridge, a valley, an ending point, a bifurcation, a lower core, a lift, and a minutia point which is a point where a structure of the ridge changes.

In operation S1912, the electronic device 1000 may generate HCP from the generated curve. For example, the electronic device 1000 may detect a plurality of feature points from the generated curve, generate feature vectors by using the detected feature points, and determine a curvature of the curve by using angles of the generated feature vectors. Because operation S1912 may correspond to operation S808 of FIG. 8, a detailed description thereof will be omitted herein.

In operation S1914, the electronic device 1000 may determine HCP features by using the generated HCP. For example, the electronic device 1000 may determine a curvature change between HCP, a distance between HCP, and locations of HCPs by using the HCP. According to an embodiment, the HCP features may include information about a curvature change between HCP, a distance between HCP, and locations of HCP.

In operation S1916, the electronic device 1000 may decode the determined HCP features. For example, the electronic device 1000 may generate a fingerprint code by decoding the HCP features, and decode an encoded fingerprint image by using the generated fingerprint code. In operation S1018, the electronic device 1000 may embed the decoded fingerprint image into the second image. In operation S1920, the electronic device 1000 may generate a first image by embedding the decoded fingerprint image and the watermark into the second image.

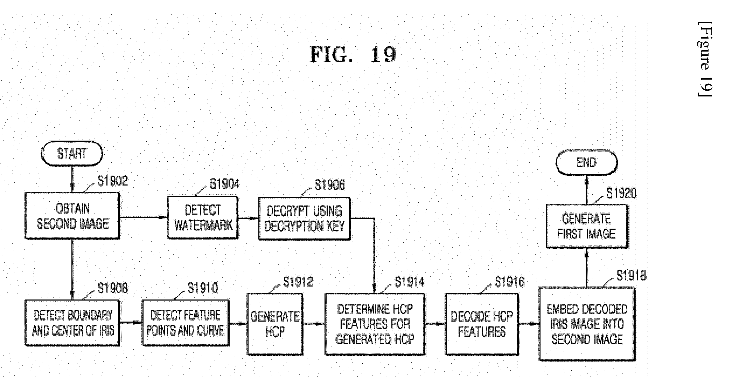

FIG. 20 is a diagram for describing a method, performed by an electronic device, of releasing security of an image including vein information, according to another embodiment.

In operation S2002, the electronic device 1000 may obtain a second image. For example, the second image obtained by the electronic device 1000 may include a vein image corresponding to vein information. Although not shown in FIG. 20, the electronic device 1000 may perform image binarization on the obtained second image before detecting a core point, a feature point, etc., in the second image.

In operation S2004, the electronic device 1000 may detect a watermark in the obtained second image. Because operation S2004 may correspond to operation S1804 of FIG. 18, a detailed description thereof will be omitted herein. In operation S2006, the electronic device 1000 may decrypt the detected watermark by using a decryption key.

In operation S2008, the electronic device 1000 may detect a core point in the second image. In operation S2010, the electronic device 1000 may detect feature points in the second image. In operation S2012, the electronic device 1000 may generate feature vectors by using the detected feature points and core point. According to an embodiment, the feature points detected by the electronic device may include a minutia point. Furthermore, the feature vectors generated by the electronic device 1000 may include information about coordinates of at least one feature point and an angle formed between the feature points. According to an embodiment, the electronic device 1000 may generate all possible feature vectors from the detected feature points, but it may randomly select some of the feature points and generate feature vectors by using only the randomly selected feature points.

In operation S2014, the electronic device 1000 may determine a homography matrix by using the detected feature points. In operation S2016, the electronic device 1000 may determine homography matrix features represented by the homography matrix. In operation S2018, the electronic device 1000 may determine feature vector features represented by the determined feature vectors. The homography matrix features and the feature vector features determined by the electronic device 1000 may represent fingerprint features in the fingerprint image.

In operation S2020, the electronic device 1000 may embed the decoded vein print image into the second image. Although not shown in FIG.20, the electronic device 1000 may decode the fingerprint image by decoding the fingerprint features represented by the homography matrix features and feature vector features. According to an embodiment, embedding, by the electronic device 1000, the decoded vein image into the second image may correspond to a process of synthesizing the decoded vein image and the second image.

In operation S2022, the electronic device 1000 may generate a first image by embedding the decoded fingerprint image and the decrypted watermark into the second image. Generating, by the electronic device 1000, the first image by using the decoded vein image, the decrypted watermark, and the second image may correspond to a process of de-obfuscating the obfuscated second image.

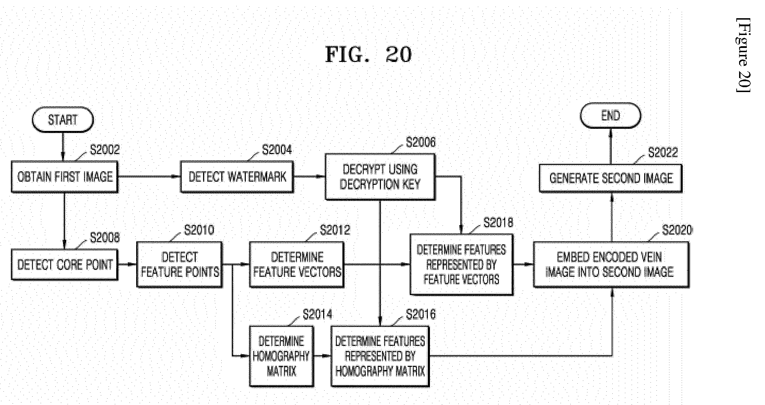

FIG. 21 is a diagram for describing a method, performed by an electronic device, of releasing security of an image including face information, according to another embodiment.

In operation S2102, the electronic device 1000 may obtain a second image. For example, the second image obtained by the electronic device 1000 may include a face image corresponding to face information. In operation S2104, the electronic device 1000 may detect a watermark in the second image. Because operation S2104 may correspond to operation S1804 of FIG. 18, a detailed description thereof will be omitted herein.

In operation S2106, the electronic device 1000 may detect first keypoints in the obtained first image. According to an embodiment, the electronic device 1000 may use a Harris corner detection algorithm, SIFT, a FAST algorithm, etc., but the present disclosure is not limited thereto.

In operation S2108, the electronic device 1000 may detect second keypoints for detecting a depth map. According to an embodiment, the electronic device 1000 may generate a RSDM by using the detected second keypoints. The RSDM may include depth information of an area around the second keypoints detected by the electronic device 1000.

In operation S2110, the electronic device 1000 may detect keypoints around a distortion area. According to an embodiment, a distortion area may include information about a difference in light-shadow features of pixels in a face image, which are determined based on the first and second keypoints. According to an embodiment, a distortion area may be generated in units of the second keypoints, and a plurality of keypoints may be included in the distortion area generated in units of the second keypoints.

For example, the electronic device 1000 may determine light-shadow features of a distortion area in a face image by detecting matrix-based keypoints around the distortion area. In operation S2114, the electronic device 1000 may decode the face image by decoding the determined light-shadow features.

In operation S2116, the electronic device 1000 may embed the decoded face image into the second image. For example, embedding, by the electronic device 1000, the decoded face image into the second image may correspond to a process of synthesizing the decoded face image and the second image. In operation S2118, the electronic device 1000 may generate a first image by synthesizing the decoded face image and the second image. According to another embodiment, the electronic device 1000 may generate a first image by synthesizing the decoded face image, the decrypted watermark, and the second image.

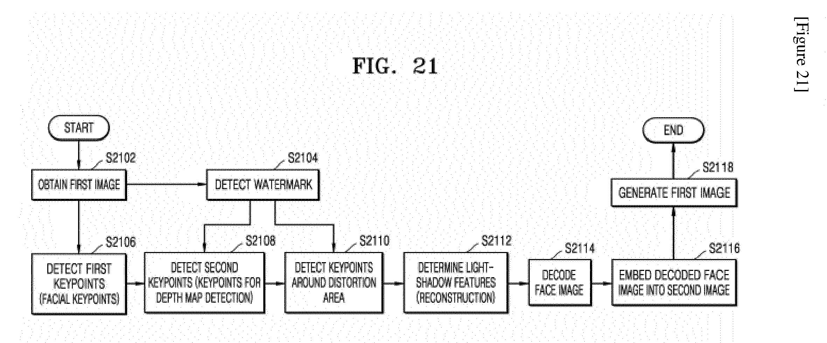

FIG. 22 is a diagram for describing a method, performed by an electronic device, of releasing security of an image including face information, according to another embodiment.

In operation S2202, the electronic device 1000 may obtain a second image. The second image obtained by the electronic device 1000 may include a face image corresponding to face information. In operation S2204, the electronic device 1000 may detect a watermark in the second image. Because operation S2204 may correspond to operation S1804 of FIG. 18, a detailed description thereof will be omitted herein.

In operation S2206, the electronic device 1000 may detect first keypoints for identifying an image of a face from the second image. According to another embodiment, when a face image is input, the electronic device 1000 may detect first keypoints by using an image learning model that outputs location information of keypoints for determining the keypoints from the face image. For example, the electronic device 1000 may detect the first keypoints in the face image via the learner 1202 connected to the database 1204 in which a learning model pre-trained based on a plurality of face images is stored.

In operation S2208, the electronic device 1000 may restore a depth map by using the detected watermark. In operation S2210, the electronic device 1000 may detect second keypoints by using the restored depth map. According to an embodiment, a RSDM used by the electronic device 1000 may have reversible characteristics in watermark extraction and decryption.

In operation S2212, the electronic device 1000 may determine light-shadow features of the face image by using the detected first and second keypoints. In operation S2214, the electronic device 1000 may decode the face image. Although not shown in FIG. 22, the electronic device 1000 may transform facial features by transforming the determined light-shadow features and decode the face image by decoding the transformed facial features. According to an embodiment, the electronic device 1000 may determine a decoding parameter and transform light-shadow features by using the determined decoding parameter.

In operation S2216, the electronic device 1000 may embed the decoded face image into the second image. In operation S2218, the electronic device 1000 may generate a first image by embedding the decoded face image into the second image. According to another embodiment, the electronic device 1000 may generate a first image by synthesizing the decoded face image, a decrypted watermark, and the second image. According to an embodiment, the decoding parameter may include parameters for determining magnitudes, directions, and vector noise of feature vectors determined from the face image.

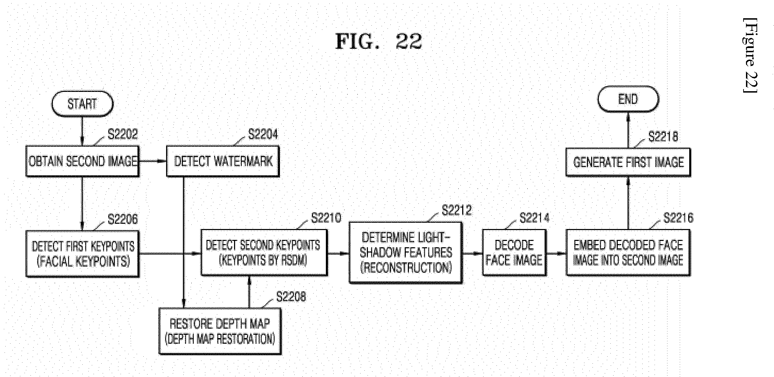

FIG. 23 is a diagram for describing a method, performed by an electronic device, of releasing security of an image including information about an ear shape, according to another embodiment.

In operation S2303, the electronic device 1000 may obtain a second image. For example, the second image obtained by the electronic device 1000 may include an ear image corresponding to information about an ear shape.

In operation S2304, the electronic device 1000 may detect an edge representing an ear shape in the ear image. For example, the electronic device 1000 may detect an edge representing an ear shape in the ear image by using a force field transform algorithm. According to an embodiment, the electronic device 1000 may detect an edge in the ear image via a learner 2302 connected to a database 2304 in which a learning model pre-trained based on a plurality of ear images is stored.

In operation S2306, the electronic device 1000 may detect a strength of a force field in the second image. For example, the electronic device 1000 may determine a net force by adding all the forces received by the force field generated by neighboring pixels of a specific pixel within a force field generated by each pixel. Because operation S2306 may correspond to operation S1408 of FIG. 14, a detailed description thereof will be omitted herein.

In operation S2308, the electronic device 1000 may generate a decryption key. The decryption key used by the electronic device 1000 may be prestored in a secured memory within the electronic device and embedded into the second image obtained by the electronic device.

In operation S2310, the electronic device 1000 may determine a decryption method. According to an embodiment, determining a decryption method by the electronic device 1000 may correspond to a process of performing key-expansion on the generated decryption key.

In operation S2314, the electronic device 100 may compute a dome matrix by using the detected strength of force field, the decryption key, and the determined decryption method. In the present specification, the dome matrix is a dome-shaped matrix, and may be generated using the decryption key and wells and ridges in the first image transformed into the force field.

In operation S2316, the electronic device 1000 may decode the dome matrix and the force field line matrix. According to another embodiment, the electronic device 1000 may determine characteristics related to the ear shape represented by the dome matrix and the force field line matrix and transform ear shape features by transforming the determined characteristics related to the ear shape. The electronic device 1000 may decode the ear image by encoding the transformed characteristics related to the ear shape.

In operation S2318, the electronic device 1000 may embed the decoded ear image into the second image. According to an embodiment, embedding, by the electronic device 1000, the decoded ear image into the second image may correspond to a process of synthesizing the decoded ear image and the second image. In operation S2320, the electronic device 1000 may generate a first image by synthesizing the decoded ear image and the second image.

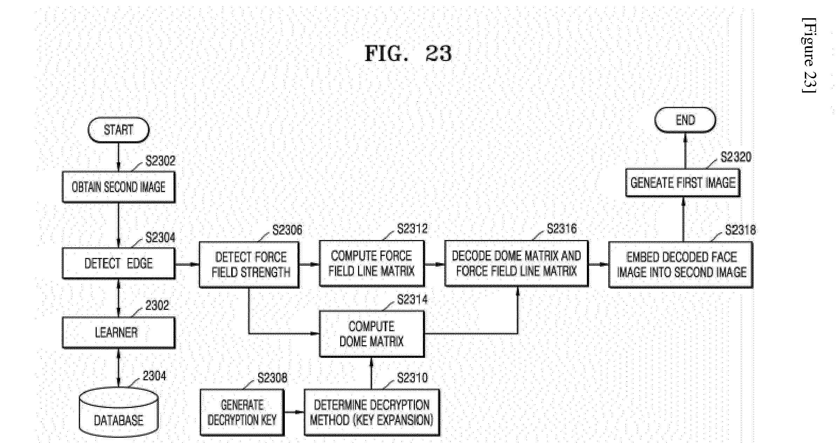

FIG. 24 is a diagram for describing a method, performed by an electronic device, of setting security on an image including a plurality of pieces of biometric data, according to an embodiment.

According to an embodiment, a first image obtained by the electronic device 1000 may include a plurality of pieces of biometric data. The electronic device 1000 may respectively detect a plurality of biometric images included in the first image for categories of the pieces of biometric data, and may perform an image security setting method on each of the biometric images respectively detected for the categories of the pieces of biometric data. According to an embodiment, the electronic device 1000 may include a processor for performing a method of setting security of an iris image, a processor for performing a method of setting security of a face image, and a processor for performing a method of setting security of an ear image.

In operation S2412, the electronic device 1000 may determine whether an iris image is detected in the first image. When in operation S2412, the electronic device 1000 determines that the iris image has been detected, in operation S2413, the electronic device 1000 may perform an image security setting method on the iris image.

When in operation S2412, the electronic device 1000 determines that the iris image has not been detected, in operation S2414, the electronic device may determine whether a face image is detected in the first image. When in operation S2414, the electronic device 1000 determines that the face image has been detected, in operation S2415, the electronic device 1000 may perform an image security setting method on the face image.

When in operation S2414, the electronic device 1000 determines that the face image has not been detected, in operation S2416, the electronic device may determine whether an ear image is detected in the first image. When in operation S2416, the electronic device 1000 determines that the ear image has been detected, in operation S2417, the electronic device 1000 may perform an image security setting method on the ear image.

When in operation S2416, the electronic device 1000 determines that the ear image has not been detected, in operation S2418, the electronic device may determine whether a fingerprint image is detected in the first image. When in operation S2418, the electronic device 1000 determines that the fingerprint image has been detected, in operation S2419, the electronic device 1000 may perform an image security setting method on the fingerprint image.

When in operation S2418, the electronic device 1000 determines that the fingerprint image has not been detected, in operation S2420, the electronic device may determine whether a vein image is detected in the first image. When in operation S2420, the electronic device 1000 determines that the vein image has been detected, in operation S2421, the electronic device 1000 may perform an image security setting method on the vein image.

When in operation S2420, the electronic device 1000 determines that the vein image has not been detected, in operation S2422, the electronic device may determine whether another biometric image is detected in the first image. When in operation S2422, the electronic device 1000 determines that the other biometric image has been detected, in operation S2423, the electronic device 1000 may perform an image security setting method on the other biometric image. However, when in operation S2422, the electronic device 1000 determines that the other biometric image has not been detected, the electronic device 1000 may end the process of performing an image security setting method. That is, there is no limitation to a category of biometric information that the electronic device 1000 can use to set security on an image.

According to an embodiment, when a plurality of biometric images are included in the first image, the electronic device 1000 may determine priorities of biometric images to be detected and detect the biometric images according to the determined priorities. Priorities of biometric images to be detected by the electronic device 1000 may be preset by a user of the electronic device.

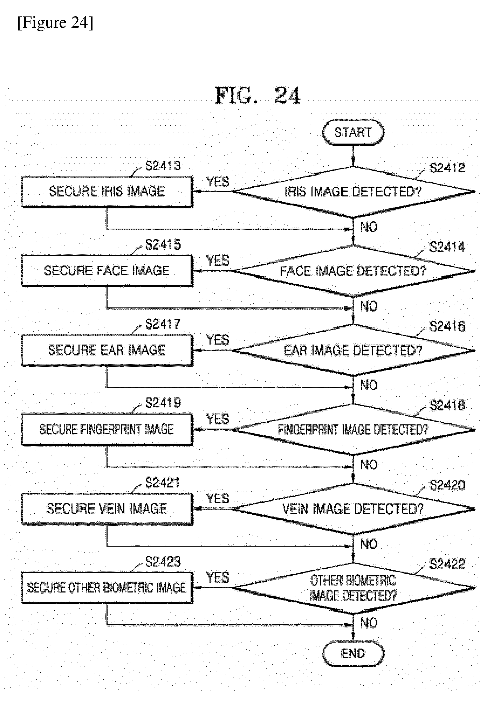

FIG. 25 is a diagram for describing a method, performed by an electronic device, of releasing security of an image including a plurality of pieces of biometric data, according to an embodiment.

According to an embodiment, a plurality of pieces of biometric data may be included in a second image obtained d by the electronic device 1000. The electronic device 1000 may respectively detect a plurality of biometric images included in the first image for categories of the pieces of biometric data, and perform an image security releasing method on each of the biometric images respectively detected for categories of the pieces of biometric data. According to an embodiment, the electronic device 1000 may include a processor for performing a method of releasing security of an iris image, a processor for performing a method of releasing security of a face image, and a processor for performing a method of releasing security of an ear image.

In operation S2502, the electronic device 1000 may determine whether a vein image is detected in the second image. When in operation S2502, the electronic device 1000 determines that the vein image has been detected, in operation S2503, the electronic device 1000 may perform an image security restoring method on the vein image.

When in operation S2502, the electronic device 1000 determines that the vein image has not been detected, in operation S2504, the electronic device may determine whether a fingerprint image is detected in the second image. When in operation S2504, the electronic device 1000 determines that the fingerprint image has been detected, in operation S2505, the electronic device 1000 may perform an image security releasing method on the fingerprint image.

When in operation S2504, the electronic device 1000 determines that the fingerprint image has not been detected, in operation S2506, the electronic device may determine whether an ear image is detected in the second image. When in operation S2506, the electronic device 1000 determines that the ear image has been detected, in operation S2507, the electronic device 1000 may perform an image security releasing method on the ear image.

When in operation S2506, the electronic device 1000 determines that the ear image has not been detected, in operation S2508, the electronic device may determine whether a face image is detected in the second image. When in operation S2508, the electronic device 1000 determines that the face image has been detected, in operation S2509, the electronic device 1000 may perform an image security releasing method on the face image.

When in operation S2508, the electronic device 1000 determines that the face image has not been detected, in operation S2510, the electronic device may determine whether an iris image is detected in the second image. When in operation S2510, the electronic device 1000 determines that the iris image has been detected, in operation S2511, the electronic device 1000 may perform an image security releasing method on the iris image.

When in operation S2510, the electronic device 1000 determines that the iris image has not been detected, in operation S2512, the electronic device may determine whether another biometric image is detected in the second image. When in operation S2512, the electronic device 1000 determines that the other biometric image has been detected, in operation S2513, the electronic device 1000 may perform an image security releasing method on the other biometric image. However, when in operation S2512, the electronic device 1000 determines that the other biometric image has not been detected, the electronic device 1000 may end the process of performing an image security releasing method. That is, there is no limitation to a category of biometric information that the electronic device 1000 can use to release security of an image.

According to an embodiment, when a plurality of biometric images are included in the second image, the electronic device 1000 may determine priorities of biometric images to be detected and detect the biometric images according to the determined priorities. Priorities of biometric images to be detected by the electronic device 1000 may be preset by the user of the electronic device. In addition, priorities of biometric images to be detected when the electronic device 1000 performs an image security setting method may be different from those when the electronic device 1000 performs an image security releasing method. For example, the electronic device 1000 may detect biometric images in the order of an iris image, a face image, and an ear image when performing an image security setting method, while it may detect the biometric images in the order of an ear image, a face image, and an iris image when performing an image security releasing method.

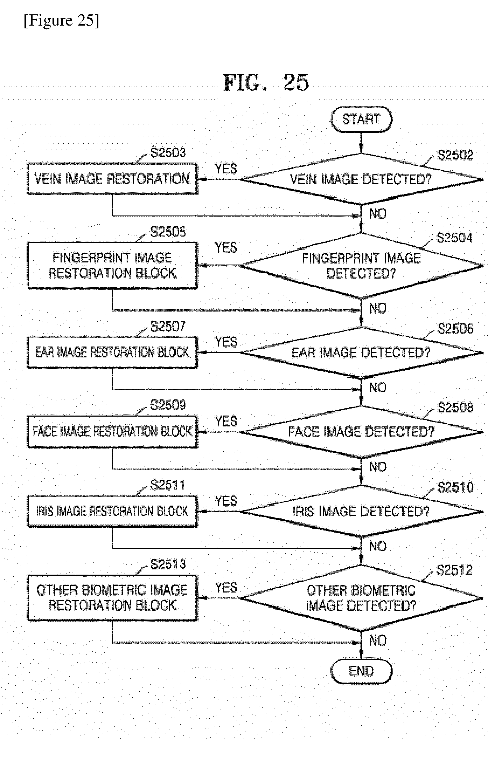

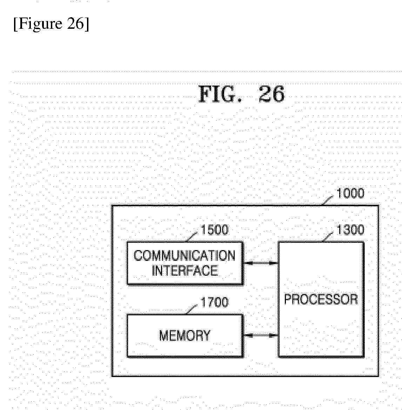

FIGS. 26 and 27 are block diagrams of an electronic device for performing a method of setting security onan image including biometric data and a method of releasing security of an image including biometric data, according to embodiments.

An electronic device 1000 according to an embodiment may include a processor 1300, a communication interface 1500, and a memory 1700. All components shown in FIG. 26 are not essential components The electronic device 1000 may be implemented with more or fewer components than those shown in FIG. 26.

For example, as shown in FIG. 27, an electronic device 1000 according to another embodiment may further include a sensor unit 1400, an audio/video (A/V) inputter 1600, and a memory 1700 in addition to a user inputter 1100, an outputter 1200, a processor 1300, and a communicator 1500.

The user inputter 1100 refers to a means via which a user inputs data for controlling the electronic device 1000. Examples of the user inputter 1100 may include, but are not limited to, a keypad, a dome switch, a touch pad (a capacitive overlay type, a resistive overlay type, an infrared beam type, a surface acoustic wave type, an integral strain gauge type, a piezoelectric type, etc.), a jog wheel, and a jog switch.

The user inputter 1100 may receive a user input for selecting at least one piece of biometric data from among a plurality of pieces of biometric data included in the first image obtained by the electronic device 1000. The electronic device 1000 may encode only biometric images corresponding to pieces of the selected biometric data based on the user input. The outputter 1200 may output an audio signal, a video signal, or a vibration signal, and include a display 1210, an audio outputter 1220, and a vibration motor 1230.

The display 1210 includes a screen for displaying and outputting information processed by the electronic device 1000. In addition, the screen may display an image. For example, at least a portion of the screen may display at least a portion of the first image and a second image generated using an obfuscated first image.

The audio outputter 1220 may output audio data received from the communicator 1500 or stored in the memory 1700. The audio outputter 1220 may also output sound signals associated with functions performed by the electronic device 1000 (e.g., a call signal reception sound, a message reception sound, and a notification sound).

The processor 1300 generally controls all operations of the electronic device 1000. For example, the processor 1300 may control all operations of the user inputter 1100, the outputter 1200, the sensor unit 1400, the communicator 1500, and the A/V inputter 1600 by executing programs stored in the memory 1700. Furthermore, the processor 1300 may perform the functions of the electronic device 1000 described with reference to FIGS. 1 through 25 by executing programs stored in the memory 1700.

According to an embodiment, the processor 1300 may control the user inputter 1100 to receive a user's text, image, and video input. The processor 1300 may control a microphone 1620 to receive a user's voice input. The processor 1300 may execute an application for performing an operation of the electronic device 1000 based on a user input and control a user input to be received via the executed application.

The processor 1300 may control the communicator and the memory to search for a region including the biometric data in a first image, detect a biometric image corresponding to the biometric data in the searched region, encode the detected biometric image, and generate a second image by synthesizing a watermark for blocking access to the biometric data, the first image, and the encoded biometric image.

The processor 1300 may train a neural network by inputting training data to the neural network. For example, the processor 1300 may train a neural network that outputs a region including biometric data in the first or second image by inputting training data to a plurality of learning models (image learning models) stored in the memory 1700 or a server 2000.

In other words, when the first image is input, the processor 1300 may search for the region including the biometric data by using an image learning model that outputs the searched region and location information for identifying the region.

The processor 1300 may determine categories of the biometric data included in the searched region and detect a biometric image for each of the determined categories of the biometric data. Furthermore, the processor 1300 may determine an encoding parameter for encoding a biometric image based on the category of the biometric data, and encode the biometric image by using the determined encoding parameter. In addition, the processor 1300 may encode the detected biometric image by using an encoding learning model that is pre-trained based on a history of detection of the biometric image in the first image.

According to an embodiment, the processor 1300 may control the communication interface 1500 to share the second image with a DB outside the electronic device that performs a method of setting security on an image including biometric data. The processor 1300 may encode the detected biometric image while maintaining the same visual information of the biometric image.

In addition, the processor 1300 may accurately detect a biometric image corresponding to biometric data included in the first or second image by using a plurality of image learning models stored in the memory 1700 or the server 2000.

According to another embodiment, the processor 1300 may search for a region including the biometric data in a second image, detect a biometric image corresponding to the biometric data in the searched region, decode the detected biometric image, and generate a first image by synthesizing a watermark for blocking access to the biometric data, the decoded biometric image, and the second image. According to an embodiment, decryption key used by the processor 1300 to generate the first image may be detected in the second image, and be decrypted in advance by using a preset decryption key.

The sensor unit 1400 may detect a status of the electronic device 1000 or surroundings of the electronic device 1000 and transmit information about the detected status to the processor 1300. The sensor unit 1400 may be used to generate some of specification information of the electronic device 1000, status information of the electronic device 1000, surrounding environment information of the electronic device 1000, information about a user's status, and information about a user's device usage history.

The sensor unit 1400 may include at least one of a magnetic sensor 1410, an acceleration sensor 1420, a temperature/humidity sensor 1430, an infrared sensor 1440, a gyroscope sensor 1450, a position sensor (e.g., a global positioning system (GPS)) 1460, a barometric pressure sensor 1470, a proximity sensor 1480, and an RGB sensor (an illuminance sensor) 1490, but is not limited thereto. Because functions of each sensor may be inferred intuitively by those of ordinary skill in the art, detailed descriptions thereof will be omitted here.

The communicator 1500 may include one or more components that enable the electronic device 1000 to communicate with another device (not shown) and the server 2000. The other device may be a computing device such as the electronic device 1000 or a sensor device, but is not limited thereto. For example, the communicator 1500 may include a short-range wireless communication unit 1510, a mobile communication unit 1520, or a broadcast receiver 1530.

The short-range wireless communication unit 1510 may include a Bluetooth communication unit, a Bluetooth Low Energy (BLE) communication unit, a Near Field Communication (NFC) unit, a wireless local area network (WLAN) (or Wi-Fi) communication unit, a Zigbee communication unit, an Infrared Data Association (IrDA) communication unit, a Wi-Fi Direct (WFD) communication unit, an ultra- wideband (UWB) communication unit, an Ant+ communication unit, etc., but is not limited thereto.

The mobile communication unit 1520 transmits or receives a wireless signal to or from at least one of a base station, an external terminal, and a server on a mobile communication network. In this case, the wireless signal may be a voice call signal, a video call signal, or data in any one of various formats for transmission and reception of a text/multimedia message.

The broadcast receiver 1530 receives broadcast signals and/or broadcast-related information from the outside via a broadcast channel. The broadcast channel may include a satellite channel and a terrestrial channel. According to an embodiment, the electronic device 1000 may not include the broadcast receiver 1530. Furthermore, the communicator 1500 may transmit, to the server 2000, the first image obtained by the electronic device 1000 or receive, from the server 2000, the second image generated using an obfuscated portion of the first image.

According to an embodiment, the communicator 1500 may receive an image, etc., stored in another electronic device 1000 connected to the electronic device 1000, or transmit an image stored in the memory within the electronic device 1000 to another electronic device. For example, the communicator 1500 may transmit an identifier (e.g., a URL or metadata) of the first image to the server 2000 or another electronic device.

The A/V inputter 1600 for inputting an audio or video signal may include a camera 1610, the microphone 1620, etc. The camera 1610 may obtain image frames from a video or still images via an image sensor in a video call mode or shooting mode. An image captured via the image sensor may be processed by the processor 1300 or a separate image processor (not shown).

The microphone 1620 receives an external sound signal and process the sound signal as electrical audio data.

For example, the microphone 1620 may receive a sound signal from an external device or a user. The microphone 1620 may receive a user's voice input. The microphone 1620 may use various noise removal algorithms to remove noise generated in the process of receiving an external sound signal.

The memory 1700 may store programs necessary for processing or control performed by the processor 1300 or store data input to or output from the electronic device 1000. Furthermore, the memory 1700 may store an image and a result of searching an image stored in the memory 1700. The memory 1700 may store information related to images stored in the electronic device 1000. For example, the memory 1700 may store a preset encryption key, a preset decryption key, an encoding parameter, a decoding parameter, an encryption method, a decryption method, an image segmentation algorithm, an image learning model for searching for a region including biometric data and detecting a biometric image corresponding to the biometric data, etc.

Furthermore, the memory 1700 may further store a neural network trained based on a plurality of images or videos, layers for specifying an architecture of the neural network, and information about weights between the layers. For example, the memory 1700 may store not only a trained neural network but also an obtained original image; an image obtained by obfuscating the original image; an image obtained by de-obfuscating the obfuscated image, etc.

The memory 1700 may include at least one type of storage medium from among a flash memory-type memory, a hard disk-type memory, a multimedia card micro-type memory, a card-type memory (e.g., an SD card or an XD memory), random access memory (RAM), static RAM (SRAM), read-only memory (ROM), electrically erasable programmable ROM (EEPROM), PROM, a magnetic memory, a magnetic disc, and an optical disc. Programs stored in the memory 1700 may be categorized into a plurality of modules according to their functions, such as a user interface (UI) module 1710, a touch screen module 1720, and a notification module 1730.

The UI module 1710 may provide, for each application, a specialized UI, a graphical UI (GUI), etc. interworking with the electronic device 1000. The touch screen module 1720 may detect a user's touch gesture on a touch screen and transmit information about the detected touch gesture to the processor 1300. According to some embodiments, the touch screen module 1720 may recognize and analyze a touch code. The touch screen module 1720 may be formed using separate hardware including a controller.

The notification module 1730 may generate a signal for notifying the occurrence of an event in the electronic device 1000. Examples of events occurring in the electronic device 1000 include call signal reception, message reception, key signal input, and schedule notification. The notification module 1730 may output a notification signal in the form of a video signal via the display 1210, a notification signal in the form of an audio signal via the audio outputter 1220, and a notification signal in the form of a vibration signal via the vibration motor 1230.

According to an embodiment, the electronic device 1000 may perform obfuscation to prevent leakage of biometric data included in a first image, e.g., by obtaining the first image including the biometric data, encoding the obtained first image, and generating a second image by synthesizing the encoded biometric image, a watermark, and the first image. However, the electronic device 1000 may perform image obfuscation by obtaining an image including biometric data in which a plurality of images are arranged in a time series manner, detecting an image corresponding to the biometric data in the obtained image, encoding the detected image, and synthesizing a watermark and the original image. An image security releasing method performed by the electronic device 1000 on an encoded image may correspond to de-obfuscation of an image.

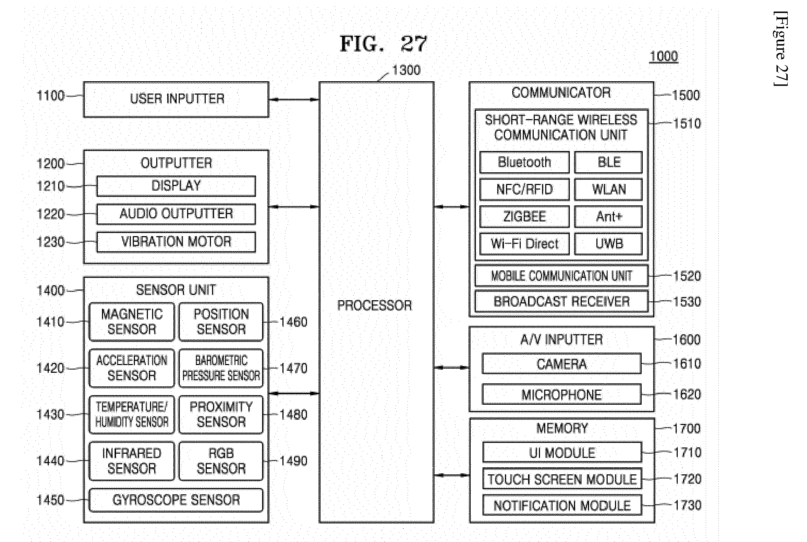

FIG. 28 is a diagram for describing categories of biometric data included in an image processed by an electronic device, according to an embodiment.

According to an embodiment, a first image encoded by the electronic device 1000 may include one or more pieces of biometric data. For example, the first image encoded by the electronic device 10000 may include iris information, face information, fingerprint information, palm print information, vein information, ear shape information, and other biometric information. The electronic device 1000 may determine categories of pieces of biometric data in order to determine whether each of the pieces of biometric data is included in the first or second image, and store, in a memory, an image learning model capable of detecting biometric images corresponding to the determined categories of the pieces of biometric data. According to another embodiment, the electronic device 1000 may store categories 2814 of various pieces of biometric information in the memory by using preset identification codes 2812.

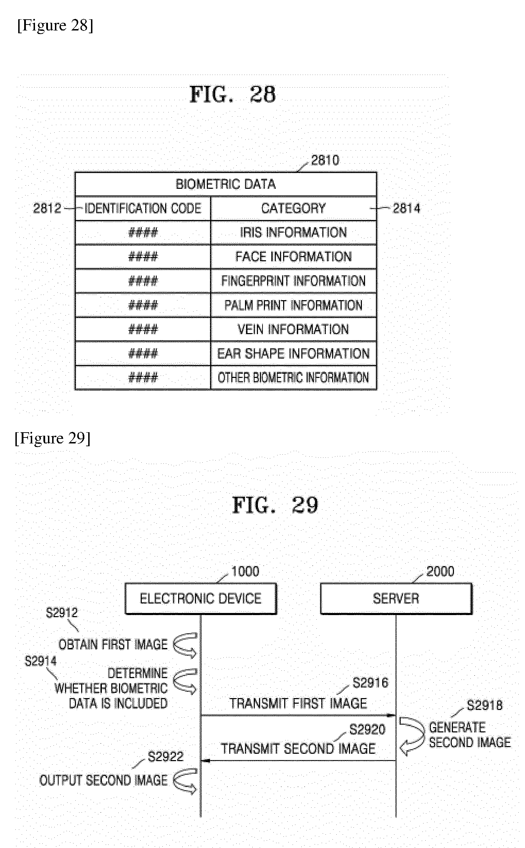

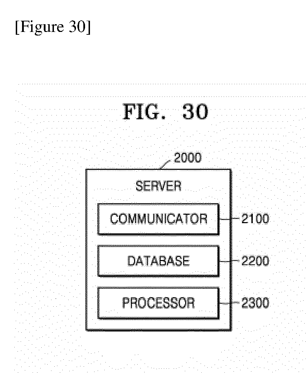

FIG. 29 is a diagram for describing a method, performed by an electronic device, of setting or releasing security on an image by using a server, according to an embodiment.

According to an embodiment, the electronic device 1000 may set or release security of an image using a server. For example, in operation S2912, the electronic device 1000 may obtain a first image including biometric data. In operation S2914, the electronic device 1000 may determine whether biometric data is included in the first image. In operation S2916, when the electronic device 1000 determines that the biometric data is included in the first image, it may transmit the first image to the server 2000.

In operation S2918, the server 2000 may generate a second image by obfuscating the first image including the biometric data. For example, the server 2000 may generate the second image by performing the same method as the image security setting method of FIG. 3 performed by the electronic device 1000.

In operation S2920, the server 2000 may transmit the generated second image to the electronic device 1000. That is, the electronic device 1000 may receive an obfuscated image from the server 2000. In operation S2922, the electronic device 1000 may output the received second image.

According to another embodiment, the electronic device 1000 may perform an image security releasing method by using the server 2000. For example, the electronic device 1000 may receive a second image obfuscated to prevent leakage of biometric data and transmit the received second image to the server 2000. The server 2000 may receive the obfuscated second image and generate a first image by de-obfuscating the received second image. The server 2000 may transmit the generated first image to the electronic device 1000. The electronic device 1000 may output the de-obfuscated first image received from the server.

FIG. 30 is a block diagram of a server according to an embodiment.

A server 2000 may include a communicator 2100, a DB 2200, and a processor 2300.

The communicator 2100 may include one or more components that enable communication with the electronic device 1000. The communicator 2100 may receive a first image from the electronic device 1000 or transmit a second image generated by encoding the first image as the first image.

The DB 2200 may store an image learning model for detecting a region including biometric data in the first image and a biometric image corresponding to the biometric data, an encoding parameter for encoding an image, a decoding parameter for decoding an image, a preset encryption key, and a preset decryption key.

For example, the DB 2200 may store an image learning model for searching for a region including biometric data in the first image and a learning model for detecting a biometric image in the first image. In addition, the DB 2200 may further store information related to images stored in the electronic device 1000. The DB 2200 may further store an original image that has not been obfuscated and an image that has been obfuscated.

The processor 2300 generally controls all operations of the server 2000. For example, the processor 2300 may control all operations of the DB 2200 and the communicator 2100 by executing programs stored in the DB 2300 of the server 2000. The processor 2300 may perform some of the operations of the electronic device 1000 described with reference to FIGS. 1 through 25 by executing programs stored in the DB 2200.

That is, the processor 2300 searches for a region including the biometric data in a first image, detect a biometric image corresponding to the biometric data in the searched region, encode the detected biometric image, and generate a second image by synthesizing a watermark for blocking access to the biometric data, the first image, and the encoded biometric image.

In addition, the processor 2300 may search for a region including the biometric data in a second image, detect a biometric image corresponding to the biometric data in the searched region, decode the detected biometric image, and generate a first image by synthesizing a watermark for blocking access to the biometric data, the decoded biometric image, and the second image.

Some embodiments may also be implemented in the form of recording media including instructions executable by a computer, such as a program module executed by the computer. The computer-readable recording media may be any available media that are accessible by a computer and include both volatile and nonvolatile media and both removable and non-removable media. Furthermore, the computer-readable recording media may include both computer storage media and communication media. The computer storage media include both volatile and nonvolatile, removable and non-removable media implemented using any method or technology for storage of information such as computer-readable instructions, data structures, program modules or other data.

Furthermore, in the present specification, the term "unit" may be a hardware component such as a processor or circuit and/or a software component that is executed by a hardware component such as a processor.

The above description of the present disclosure is provided for illustration, and it will be understood by those of ordinary skill in the art that changes in form and details may be readily made therein without departing from technical idea or essential features of the present disclosure. Accordingly, the above-described embodiments and all aspects thereof are merely examples and are not limiting. For example, each component defined as an integrated component may be implemented in a distributed fashion, and likewise, components defined as separate components may be implemented in an integrated form.

The scope of the present disclosure is defined not by the detailed description thereof but by the following claims.

**Claims**

**1.** A method of setting security on an image including biometric data, the method comprising:

searching (S310) for a region including the biometric data in a first image;
obtaining predetermined user identification information;
detecting (S320), in the searched region, a biometric image of a specific user corresponding to the specific user's biometric data among the biometric data, wherein the biometric image matches the obtained predetermined user identification information of the specific user;

encoding (S330) the detected biometric image of the specific user; and

generating (S340) a second image by synthesizing a watermark for blocking access to the specific user's biometric data, the first image, and the encoded biometric image of the specific user.

2. The method of claim 1, wherein the watermark is created using the specific user's biometric data and a preset encryption key in at least one domain from among spatial domain and frequency domain.

3. The method of claim 1, wherein the searching for the region including the biometric data further comprises:
when the first image is input, searching for the region by using an image learning model that outputs location information for identifying the searched region and the region including the biometric data.

4. The method of claim 1, wherein the detecting of the biometric image further comprises:

   determining categories of the specific user's biometric data included in the searched region; and
   detecting the biometric image for each of the determined categories of the specific user's biometric data.

5. The method of claim 1, wherein the encoding of the biometric image further comprises:

   determining, based on a category of the specific user's biometric data, an encoding parameter for encoding the biometric image; and
   encoding the biometric image by using the determined encoding parameter.

6. The method of claim 5, wherein the encoding parameter is prestored in a memory within an electronic device for performing the method of setting security on the image including the specific user's biometric data or is embedded into the first image.

7. The method of claim 1, wherein the biometric data comprises at least one of iris information, face information, fingerprint information, palm print information, vein information, and ear shape information.

8. The method of claim 1, further comprising:
sharing the second image with a database outside an electronic device for performing the method of setting security on the image including the specific user's biometric data.

9. The method of claim 1, wherein the first image is obtained from at least one from among a memory within an electronic device for performing the method of setting security on the image including the specific user's biometric data, another electronic device connected to the electronic device in a wired or wireless manner and including a display panel for displaying an image, and a database that stores a plurality of images outside of the electronic device.

10. A method of releasing security of an image including a specific user's biometric data, said image having been generated according to the method of claim 1, the method comprising:

    searching (S1610) for a region including the specific user's biometric data in a second image;
    detecting (S1620) a biometric image corresponding to the specific user's biometric data in the searched region;
    decoding (S1630) the detected biometric image; and
    generating (S1640) a first image by using a watermark for blocking access to the specific user's biometric data, the decoded biometric image, and the second image.

11. The method of claim 10, wherein the watermark is detected in the second image and decrypted in advance by using a preset decryption key.

12. An electronic device (1000) for setting security on an image including biometric data, the electronic device comprising:

    a communication interface (1500);
    a memory (1700) storing one or more instructions; and
    at least one processor (1300) configured to execute the one or more instructions to control the electronic device to:

search for a region including the biometric data in a first image;

obtain predetermined user identification information;

detect, in the searched region, a biometric image of a specific user corresponding to the specific user's biometric data among the biometric data, wherein the biometric image matches the obtained predetermined user identification information of the specific user;

encode the detected biometric image of the specific user; and

generate a second image by synthesizing a watermark for blocking access to the specific user's biometric data, the first image, and the encoded biometric image of the specific user.

13. The electronic device of claim 12, wherein the watermark is created using the specific user's biometric data and a preset encryption key in at least one domain from among spatial domain and frequency domain.

14. A computer-readable recording medium having recorded thereon a program for executing the method of claim 1 on a computer.

**Patentansprüche**

1. Verfahren zum Einstellen der Sicherheit eines Bildes, das biometrische Daten beinhaltet, wobei das Verfahren Folgendes umfasst:

Suchen (S310) nach einer Region, welche die biometrischen Daten beinhaltet, in einem ersten Bild;

Erhalten von vorbestimmten Benutzeridentifikationsinformationen;

Detektieren (S320), in der gesuchten Region, eines biometrischen Bildes eines spezifischen Benutzers entsprechend den biometrischen Daten des spezifischen Benutzers unter den biometrischen Daten, wobei das biometrische Bild mit den erhaltenen vorbestimmten Benutzeridentifikationsinformationen des spezifischen Benutzers übereinstimmt;

Codieren (S330) des detektierten biometrischen Bildes des spezifischen Benutzers; und

Erzeugen (S340) eines zweiten Bildes durch Synthetisieren eines Wasserzeichens zum Blockieren von Zugriff auf die biometrischen Daten des spezifischen Benutzers, das erste Bild und das codierte biometrische Bild des spezifischen Benutzers.

2. Verfahren nach Anspruch 1, wobei das Wasserzeichen unter Verwendung der biometrischen Daten des spezifischen Benutzers und eines voreingestellten Verschlüsselungsschlüssels in zumindest einer Domäne aus räumlicher Domäne und Frequenzdomäne geschaffen wird.

3. Verfahren nach Anspruch 1, wobei das Suchen nach der Region, welche die biometrischen Daten beinhaltet, ferner Folgendes umfasst:

wenn das erste Bild eingegeben ist, Suchen nach der Region durch Verwenden eines Bildlernmodells, das Standortinformationen zum Identifizieren der gesuchten Region und der Region, welche die biometrischen Daten beinhaltet, ausgibt.

4. Verfahren nach Anspruch 1, wobei das Detektieren des biometrischen Bildes ferner Folgendes umfasst:

Bestimmen von Kategorien der biometrischen Daten des spezifischen Benutzers, die in der gesuchten Region enthalten sind; und

Detektieren des biometrischen Bildes für jede von den bestimmten Kategorien der biometrischen Daten des spezifischen Benutzers.

5. Verfahren nach Anspruch 1, wobei das Codieren des biometrischen Bildes ferner Folgendes umfasst:

Bestimmen, basierend auf einer Kategorie der biometrischen Daten des spezifischen Benutzers, eines Codierungsparameters zum Codieren des biometrischen Bildes; und

Codieren des biometrischen Bildes durch Verwenden des bestimmten Codierungsparameters.

6. Verfahren nach Anspruch 5, wobei der Codierungsparameter in einem Speicher innerhalb einer elektronischen Vorrichtung zum Durchführen des Verfahrens zum Einstellen der Sicherheit an dem Bild, das die biometrischen Daten des spezifischen Benutzers beinhaltet, vorgespeichert ist, oder in das erste Bild eingebettet ist.

7. Verfahren nach Anspruch 1, wobei die biometrischen Daten zumindest eines von Irisinformationen, Gesichtsinformationen, Fingerabdruckinformationen, Handflächenabdruckinformationen, Veneninformationen und Ohrforminformationen umfassen.

8. Verfahren nach Anspruch 1, ferner umfassend:
Teilen des zweiten Bildes mit einer Datenbank außerhalb einer elektronischen Vorrichtung zum Durchführen des Verfahrens zum Einstellen der Sicherheit an dem Bild, das die biometrischen Daten des spezifischen Benutzers beinhaltet.

9. Verfahren nach Anspruch 1, wobei das erste Bild aus zumindest einem aus einem Speicher innerhalb einer elektronischen Vorrichtung zum Durchführen des Verfahrens zum Einstellen der Sicherheit an dem Bild, das die biometrischen Daten des spezifischen Benutzers beinhaltet, einer anderen elektronischen Vorrichtung, die mit der elektronischen Vorrichtung auf eine drahtgebundene oder drahtlose Weise verbunden ist und ein Anzeigefeld zum Anzeigen eines Bildes beinhaltet, und einer Datenbank, die eine Vielzahl von Bildern außerhalb der elektronischen Vorrichtung speichert, erhalten wird.

10. Verfahren zum Freigeben der Sicherheit eines Bildes, das die biometrischen Daten eines spezifischen Benutzers beinhaltet, wobei das Bild gemäß dem Verfahren nach Anspruch 1 erzeugt worden ist, wobei das Verfahren Folgendes umfasst:

Suchen (S1610) nach einer Region, welche die biometrischen Daten des spezifischen Benutzers beinhaltet, in einem zweiten Bild;
Detektieren (S 1620) eines biometrischen Bildes entsprechend den biometrischen Daten des spezifischen Benutzers in der gesuchten Region;
Decodieren (S1630) des detektierten biometrischen Bildes; und
Erzeugen (S1640) eines ersten Bildes durch Verwenden eines Wasserzeichens zum Blockieren von Zugriff auf die biometrischen Daten des spezifischen Benutzers, das decodierte biometrische Bild und das zweite Bild.

11. Verfahren nach Anspruch 10, wobei das Wasserzeichen in dem zweiten Bild detektiert und im Voraus durch Verwenden eines voreingestellten Entschlüsselungsschlüssels entschlüsselt wird.

12. Elektronische Vorrichtung (1000) zum Einstellen der Sicherheit eines Bildes, das biometrische Daten beinhaltet, wobei die elektronische Vorrichtung Folgendes umfasst:

eine Kommunikationsschnittstelle (1500);
einen Speicher (1700), der eine oder mehrere Anweisungen speichert; und
zumindest einen Prozessor (1300), der dazu konfiguriert ist, die eine oder mehreren Anweisungen auszuführen, um die elektronische Vorrichtung zu Folgendem zu steuern:

Suchen nach einer Region, welche die biometrischen Daten beinhaltet, in einem ersten Bild;
Erhalten von vorbestimmten Benutzeridentifikationsinformationen;
Detektieren, in der gesuchten Region, eines biometrischen Bildes eines spezifischen Benutzers entsprechend den biometrischen Daten des spezifischen Benutzers unter den biometrischen Daten, wobei das biometrische Bild mit den erhaltenen vorbestimmten Benutzeridentifikationsinformationen des spezifischen Benutzers übereinstimmt;
Codieren des detektierten biometrischen Bildes des spezifischen Benutzers; und
Erzeugen eines zweiten Bildes durch Synthetisieren eines Wasserzeichens zum Blockieren von Zugriff auf die biometrischen Daten des spezifischen Benutzers, das erste Bild und das codierte biometrische Bild des spezifischen Benutzers.

13. Elektronische Vorrichtung nach Anspruch 12, wobei das Wasserzeichen unter Verwendung der biometrischen Daten des spezifischen Benutzers und eines voreingestellten Verschlüsselungsschlüssels in zumindest einer Domäne aus räumlicher Domäne und Frequenzdomäne geschaffen wird.

14. Computerlesbares Aufzeichnungsmedium, auf dem ein Programm zum Ausführen des Verfahrens nach Anspruch 1 auf einem Computer aufgezeichnet ist.

**Revendications**

1. Procédé de réglage de la sécurité sur une image comprenant des données biométriques, le procédé comprenant :

   la recherche (S310) d'une zone comprenant les données biométriques dans une première image ;
   l'obtention d'informations d'identification d'utilisateur prédéfinies ;
   la détection (S320), dans la zone recherchée, d'une image biométrique d'un utilisateur spécifique correspondant aux données biométriques de l'utilisateur spécifique parmi les données biométriques, ladite image biométrique correspondant aux informations d'identification d'utilisateur prédéfinies obtenues de l'utilisateur spécifique ;
   le codage (S330) de l'image biométrique détectée de l'utilisateur spécifique ; et
   la génération (S340) d'une seconde image par synthèse d'un filigrane servant à bloquer l'accès aux données biométriques de l'utilisateur spécifique, de la première image et de l'image biométrique codée de l'utilisateur spécifique.

2. Procédé selon la revendication 1, ledit filigrane étant créé à l'aide des données biométriques spécifiques de l'utilisateur et d'une clé de cryptage prédéfinie dans au moins un domaine parmi le domaine spatial et le domaine fréquentiel.

3. Procédé selon la revendication 1, ladite recherche de la zone comprenant les données biométriques comprenant en outre :
   lorsque la première image est entrée, la recherche de la zone à l'aide d'un modèle d'apprentissage d'image qui produit des informations de localisation pour identifier la zone recherchée et la zone comprenant les données biométriques.

4. Procédé selon la revendication 1, ladite détection de l'image biométrique comprenant en outre :

   la détermination des catégories de données biométriques spécifiques de l'utilisateur comprises dans la zone recherchée ; et
   la détection de l'image biométrique pour chacune des catégories déterminées des données biométriques de l'utilisateur spécifique.

5. Procédé selon la revendication 1, ledit codage de l'image biométrique comprenant en outre :

   la détermination, sur la base d'une catégorie de données biométriques de l'utilisateur spécifique, d'un paramètre de codage pour coder l'image biométrique ; et
   le codage de l'image biométrique à l'aide du paramètre de codage déterminé.

6. Procédé selon la revendication 5, ledit paramètre de codage étant pré-stocké dans une mémoire au sein d'un dispositif électronique pour réaliser le procédé de réglage de la sécurité sur l'image comprenant les données biométriques spécifiques de l'utilisateur ou étant incorporé dans la première image.

7. Procédé selon la revendication 1, lesdites données biométriques comprenant au moins une parmi les informations d'iris, les informations de visage, les informations d'empreintes digitales, les informations d'empreinte palmaires, les informations de veines et les informations de forme d'oreille.

8. Procédé selon la revendication 1, comprenant en outre :
   le partage de la seconde image avec une base de données à l'extérieur d'un dispositif électronique pour réaliser le procédé de réglage de la sécurité sur l'image comprenant les données biométriques spécifiques de l'utilisateur.

9. Procédé selon la revendication 1, ladite première image étant obtenue à partir d'au moins un parmi une mémoire au sein d'un dispositif électronique pour réaliser le procédé de réglage de la sécurité sur l'image comprenant les données biométriques de l'utilisateur spécifique, un autre dispositif électronique connecté au dispositif électronique de manière filaire ou sans fil et comprenant un panneau d'affichage pour afficher une image, et une base de données qui stocke une pluralité d'images à l'extérieur du dispositif électronique.

10. Procédé de relâchement de la sécurité d'une image comprenant les données biométriques d'un utilisateur spécifique, ladite image ayant été générée conformément au procédé selon la revendication 1, le procédé comprenant :
   la recherche (S1610) d'une zone comprenant les données biométriques de l'utilisateur spécifique dans une seconde image :

la détection (S1620) d'une image biométrique correspondant aux données biométriques spécifiques de l'utilisateur dans la zone recherchée ;
le décodage (S1630) de l'image biométrique détectée ; et
la génération (S1640) d'une première image à l'aide d'un filigrane pour bloquer l'accès aux données biométriques de l'utilisateur spécifique, de l'image biométrique décodée et de la seconde image.

11. Procédé selon la revendication 10, ledit filigrane étant détecté dans la seconde image et décrypté à l'avance à l'aide d'une clé de décryptage prédéfinie.

12. Dispositif électronique (1000) permettant le réglage de la sécurité sur une image comprenant des données biométriques, le dispositif électronique comprenant :

une interface de communication (1500) ;
une mémoire (1700) stockant une ou plusieurs instructions ; et
au moins un processeur (1300) configuré pour exécuter lesdites une ou plusieurs instructions de manière à commander au dispositif électronique de :

rechercher une zone comprenant les données biométriques dans une première image ;
obtenir des informations d'identification d'utilisateur prédéfinies ;
détecter, dans la zone recherchée, une image biométrique d'un utilisateur spécifique correspondant aux données biométriques de l'utilisateur spécifique parmi les données biométriques, ladite image biométrique correspondant aux informations d'identification d'utilisateur prédéfinies obtenues de l'utilisateur spécifique ;
coder l'image biométrique détectée de l'utilisateur spécifique ; et
générer une seconde image par synthèse d'un filigrane servant à bloquer l'accès aux données biométriques de l'utilisateur spécifique, de la première image et de l'image biométrique codée de l'utilisateur spécifique.

13. Dispositif électronique selon la revendication 12, ledit filigrane étant créé à l'aide des données biométriques de l'utilisateur spécifique et d'une clé de cryptage prédéfinie dans au moins un domaine parmi le domaine spatial et le domaine fréquentiel.

14. Support d'enregistrement lisible par ordinateur sur lequel est enregistré un programme destiné à exécuter le procédé selon la revendication 1 sur un ordinateur.

[Figure 1]

FIG. 1

[Figure 2]

[Figure 3]

# FIG. 3

```
                    ┌─────────┐
                    │  START  │
                    └─────────┘
                         │
        ┌────────────────────────────────┐
        │   SEARCH FOR REGION INCLUDING   │── S310
        │   BIOMETRIC DATA IN FIRST IMAGE │
        └────────────────────────────────┘
                         │
        ┌────────────────────────────────┐
        │ DETECT BIOMETRIC IMAGE IN       │── S320
        │ SEARCHED REGION                 │
        └────────────────────────────────┘
                         │
        ┌────────────────────────────────┐
        │ ENCODE DETECTED BIOMETRIC IMAGE │── S330
        └────────────────────────────────┘
                         │
        ┌────────────────────────────────┐
        │ GENERATE SECOND IMAGE BY        │
        │ SYNTHESIZING WATERMARK,         │── S340
        │ FIRST IMAGE, AND ENCODED        │
        │ BIOMETRIC IMAGE                 │
        └────────────────────────────────┘
                         │
                    ┌─────────┐
                    │   END   │
                    └─────────┘
```

[Figure 4]

# FIG. 4

START

SEARCH FOR REGION INCLUDING BIOMETRIC DATA IN FIRST IMAGE — S410

DETECT BIOMETRIC IMAGE CORRESPONDING TO BIOMETRIC DATA IN SEARCHED REGION — S420

ENCODE DETECTED BIOMETRIC IMAGE — S430

CREATE WATERMARK BY USING BIOMETRIC DATA AND PRESET ENCRYPTION KEY — S440

GENERATE SECOND IMAGE BY SYNTHESIZING WATERMARK, FIRST IMAGE, AND ENCODED BIOMETRIC IMAGE — S450

END

[Figure 5]

## FIG. 5

START

~S502

OBTAIN FIRST IMAGE

~S504

DETECT BOUNDARY AND CENTER OF IRIS

~S506

DETECT BOUNDARY AND CENTER OF PUPIL

~S508

GENERATE FEATURE MAP

~S510

NORMALIZATION

~S512

ENCODING (ENCODING VIA CONVOLUTION WITH WAVELET)

~S514

DETERMINE SPECTER BETWEEN ORIGINAL DATA AND FILTERED DATA

~S516

GENERATE WATERMARK BY USING ENCRYPTION KEY

~S518

EMBED WATERMARK INTO FIRST IMAGE

~S520

DENORMALIZATION

~S522

EMBED ENCODED IRIS IMAGE INTO FIRST IMAGE

~S524

GENERATE SECOND IMAGE

END

Reverse Map

402

LEARNER

404

DATABASE

[Figure 6]

FIG. 6

[Figure 7]

FIG. 7

[Figure 8]

# FIG. 8

START

↓ S801

OBTAIN FIRST IMAGE

↓ S804

DETECT CORE POINT

↑ S802

LEARNER

↑ S804

DATABASE

S806
DETECT FEATURE POINTS AND CURVE

S808
GENERATE HIGH CURVATURE POINTS (HCP)

S810
DETERMINE HCP FEATURES FOR GENERATED HCP

S812
CREATE WATERMARK USING ENCRYPTION KEY

S814
EMBED WATERMARK INTO FIRST IMAGE

S824
GENERATE SECOND IMAGE

END

S818
TRANSFORM HCP FEATURES

S820
ENCODE TRANSFORMED HCP FEATURES

S822
EMBED ENCODED FINGERPRINT IMAGE INTO FIRST IMAGE

EP 3 913 569 B1

36

[Figure 9]

FIG. 9

[Figure 10]

**FIG. 10**

[Figure 11]

FIG. 11

[Figure 12]

FIG. 12

START

↓ S1202

OBTAIN FIRST IMAGE

↓ S1204

DETECT FIRST KEYPOINTS
(FACIAL KEYPOINTS)

↓ 1202

LEARNER

↓ 1204

DATABASE

RANDOM SMART
DEPTH MAP (RSDM)

S1206

DETECT SECOND KEYPOINTS
(KEYPOINTS BY RSDM)

S1208

CREATE WATERMARK
USING ENCRYPTION KEY

S1210

EMBED WATERMARK
INTO FIRST IMAGE

S1212

TRANSFORM LIGHT-SHADOW
FEATURES (RECONSTRUCTION)

S1214

ENCODE
FACE IMAGE

S1216

EMBED ENCODED FACE
IMAGE INTO FIRST IMAGE

S1218

GENERATE
SECOND IMAGE

S1220

END

[Figure 13]

EP 3 913 569 B1

FIG. 13

DETECT
FACE IMAGE —S1302

DETECT FACIAL
KEYPOINTS —S1304

DETECT KEYPOINTS
FOR GENERATING —S1306
DEPTH MAP

DETECT
KEYPOINTS AROUND —S1308
DISTORTION AREA

DETECT KEYPOINTS
BASED ON RSDM —S1310

DISTORT LIGHT
AND SHADOWS —S1312

[Figure 14]

## FIG. 14

EP 3 913 569 B1

```
                 START

                   | S1402

           OBTAIN FIRST IMAGE

                   | S1406

 LEARNER ──→  DETECT EDGE ──→  DETECT FORCE    ──→  COMPUTE FORCE   ──→  ENCODE DOME MATRIX AND  ──→  EMBED ENCODED FACE  ──→  GENERATE
  1402              S1408       FIELD STRENGTH        FIELD LINE MATRIX    FORCE FIELD LINE MATRIX      IMAGE INTO FIRST IMAGE    SECOND IMAGE
   ↑                              S1408                S1414                S1418                        S1420                     S1422
   |                                                                                                                              |
 DATABASE                              COMPUTE DOME MATRIX                                                                        END
  1406                                  S1416
                                           ↑
             GENERATE ENCRYPTION KEY ──→ DETERMINE ENCRYPTION
                 S1410                    METHOD (KEY EXPANSION)
                                           S1412
```

FIG. 14

[Figure 15]

FIG. 15

[Figure 16]

# FIG. 16

```
        ( START )
            │
            ▼
┌──────────────────────────────┐
│  SEARCH FOR REGION INCLUDING  │──── S1610
│  BIOMETRIC DATA IN SECOND IMAGE│
└──────────────────────────────┘
            │
            ▼
┌──────────────────────────────┐
│ DETECT BIOMETRIC IMAGE IN      │──── S1620
│ SEARCHED REGION                │
└──────────────────────────────┘
            │
            ▼
┌──────────────────────────────┐
│ DECODE DETECTED BIOMETRIC IMAGE│──── S1630
└──────────────────────────────┘
            │
            ▼
┌──────────────────────────────┐
│ GENERATE FIRST IMAGE BY USING  │──── S1640
│ WATERMARK, DECODED BIOMETRIC   │
│ IMAGE, AND SECOND IMAGE        │
└──────────────────────────────┘
            │
            ▼
         ( END )
```

[Figure 17]

# FIG. 17

```
           ( START )
              │
┌─────────────────────────────┐
│   SEARCH FOR REGION INCLUDING │── S1710
│   BIOMETRIC DATA IN SECOND IMAGE │
└─────────────────────────────┘
              │
┌─────────────────────────────┐
│ DETECT BIOMETRIC IMAGE IN SEARCHED REGION │── S1720
└─────────────────────────────┘
              │
┌─────────────────────────────┐
│  DETECT WATERMARK IN SECOND IMAGE │── S1730
└─────────────────────────────┘
              │
┌─────────────────────────────┐
│  DECODE DETECTED BIOMETRIC IMAGE │── S1740
└─────────────────────────────┘
              │
┌─────────────────────────────┐
│   DECRYPT DETECTED WATERMARK │── S1750
│  BY USING PRESET DECRYPTION KEY │
└─────────────────────────────┘
              │
┌─────────────────────────────┐
│ GENERATE FIRST IMAGE BY USING DECRYPTED │── S1760
│  WATERMARK, DECODED BIOMETRIC IMAGE, │
│        AND SECOND IMAGE │
└─────────────────────────────┘
              │
           (  END  )
```

[Figure 18]

FIG. 18

START → OBTAIN SECOND IMAGE (S1802) → DETECT WATERMARK (S1804) → DECRYPT USING DECRYPTION KEY (S1808)

OBTAIN SECOND IMAGE (S1802) → DETECT BOUNDARY AND CENTER OF IRIS (S1810) → DETECT BOUNDARY AND CENTER OF PUPIL (S1812) → GENERATE FEATURE MAP (S1814) → NORMALIZATION (S1816) → DECODING (DECODING VIA CONVOLUTION WITH WAVELET) (S1818) → DETERMINE SPECTER BETWEEN ORIGINAL DATA AND FILTERED DATA (S1820) → DENORMALIZATION (S1822) → EMBED DECODED IRIS IMAGE INTO SECOND IMAGE (S1824) → GENERATE FIRST IMAGE (S1826) → END

[Figure 19]

FIG. 19

S1902 OBTAIN SECOND IMAGE

S1904 DETECT WATERMARK

S1906 DECRYPT USING DECRYPTION KEY

S1908 DETECT BOUNDARY AND CENTER OF IRIS

S1910 DETECT FEATURE POINTS AND CURVE

S1912 GENERATE HCP

S1914 DETERMINE HCP FEATURES FOR GENERATED HCP

S1916 DECODE HCP FEATURES

S1918 EMBED DECODED IRIS IMAGE INTO SECOND IMAGE

S1920 GENERATE FIRST IMAGE

START / END

[Figure 20]

FIG. 20

START → OBTAIN FIRST IMAGE (S2002) → DETECT WATERMARK (S2004) → DECRYPT USING DECRYPTION KEY (S2006)

DETECT CORE POINT (S2008) → DETECT FEATURE POINTS (S2010) → DETERMINE FEATURE VECTORS (S2012) → DETERMINE HOMOGRAPHY MATRIX (S2014) → DETERMINE FEATURES REPRESENTED BY HOMOGRAPHY MATRIX (S2016)

DETERMINE FEATURES REPRESENTED BY FEATURE VECTORS (S2018) → EMBED ENCODED VEIN IMAGE INTO SECOND IMAGE (S2020) → GENERATE SECOND IMAGE (S2022) → END

[Figure 21]

EP 3 913 569 B1

FIG. 21

START

OBTAIN FIRST IMAGE — S2102

DETECT WATERMARK — S2104

DETECT FIRST KEYPOINTS (FACIAL KEYPOINTS) — S2106

DETECT SECOND KEYPOINTS (KEYPOINTS FOR DEPTH MAP DETECTION) — S2108

DETECT KEYPOINTS AROUND DISTORTION AREA — S2110

DETERMINE LIGHT-SHADOW FEATURES (RECONSTRUCTION) — S2112

DECODE FACE IMAGE — S2114

EMBED DECODED FACE IMAGE INTO SECOND IMAGE — S2116

GENERATE FIRST IMAGE — S2118

END

[Figure 22]

## FIG. 22

```
        ┌─────────┐
        │  START  │
        └─────────┘
             │
             ▼  S2202                      S2204
  ┌────────────────────┐        ┌────────────────────┐
  │ OBTAIN SECOND IMAGE│───────▶│  DETECT WATERMARK  │
  └────────────────────┘        └────────────────────┘
             │
             ▼  S2206                      S2210                    S2212                 S2214              S2216
  ┌────────────────────┐    ┌────────────────────┐   ┌──────────────────┐    ┌──────────┐    ┌──────────────────────┐
  │ DETECT FIRST       │───▶│ DETECT SECOND      │──▶│ DETERMINE LIGHT- │───▶│ DECODE   │───▶│ EMBED DECODED FACE   │
  │ KEYPOINTS          │    │ KEYPOINTS          │   │ SHADOW FEATURES  │    │ FACE     │    │ IMAGE INTO SECOND    │
  │ (FACIAL KEYPOINTS) │    │ (KEYPOINTS BY RSDM)│   │ (RECONSTRUCTION) │    │ IMAGE    │    │ IMAGE                │
  └────────────────────┘    └────────────────────┘   └──────────────────┘    └──────────┘    └──────────────────────┘
                                       ▲
                                       │  S2208
                            ┌────────────────────────┐
                            │  RESTORE DEPTH MAP      │
                            │ (DEPTH MAP RESTORATION) │
                            └────────────────────────┘
```

```
        ┌─────────┐
        │   END   │
        └─────────┘
             ▲
             │  S2218
  ┌────────────────────┐
  │ GENERATE FIRST IMAGE│
  └────────────────────┘
```

[Figure 23]

EP 3 913 569 B1

# FIG. 23

START

S2302
OBTAIN SECOND IMAGE

S2304
DETECT EDGE

2302
LEARNER

2304
DATABASE

S2306
DETECT FORCE FIELD STRENGTH

S2312
COMPUTE FORCE FIELD LINE MATRIX

S2314
COMPUTE DOME MATRIX

S2308
GENERATE DECRYPTION KEY

S2310
DETERMINE DECRYPTION METHOD (KEY EXPANSION)

S2316
DECODE DOME MATRIX AND FORCE FIELD LINE MATRIX

S2318
EMBED DECODED FACE IMAGE INTO SECOND IMAGE

S2320
GENEATE FIRST IMAGE

END

51

[Figure 24]

# FIG. 24

[Figure 25]

## FIG. 25

[Figure 26]

FIG. 26

[Figure 27]

**FIG. 27**

[Figure 28]

## FIG. 28

| BIOMETRIC DATA | | 2810 |
| --- | --- | --- |

| IDENTIFICATION CODE | CATEGORY |
| --- | --- |
| #### | IRIS INFORMATION |
| #### | FACE INFORMATION |
| #### | FINGERPRINT INFORMATION |
| #### | PALM PRINT INFORMATION |
| #### | VEIN INFORMATION |
| #### | EAR SHAPE INFORMATION |
| #### | OTHER BIOMETRIC INFORMATION |

2812 — IDENTIFICATION CODE     CATEGORY — 2814

[Figure 29]

## FIG. 29

ELECTRONIC DEVICE 1000

SERVER 2000

S2912 OBTAIN FIRST IMAGE

S2914 DETERMINE WHETHER BIOMETRIC DATA IS INCLUDED

S2916 TRANSMIT FIRST IMAGE

S2918 GENERATE SECOND IMAGE

S2920 TRANSMIT SECOND IMAGE

S2922 OUTPUT SECOND IMAGE

[Figure 30]

FIG. 30

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005226470 A